# FASCICULE DE BREVET EUROPEEN

(11) **EP 4 536 606 B1**
(45) Date de publication et mention de la délivrance du brevet: **11.11.2026**
(21) Numéro de dépôt: 23731700.3
(22) Date de dépôt: 13.06.2023
(51) Int. Cl.: C04B 20/02

(54) **PROCÉDÉ DE RECYCLAGE DE DÉCHETS DE BÉTON DE CONSTRUCTION ET/OU DE DÉMOLITION**
VERFAHREN ZUR WIEDERVERWERTUNG VON BETONBAU- UND/ODER ABBRUCHABFÄLLEN
METHOD FOR RECYCLING CONCRETE CONSTRUCTION AND/OR DEMOLITION WASTE

(30) Priorité: 13.06.2022 FR 2205654
(43) Date de publication de la demande: 16.04.2025
(73) Titulaire: Institut National Polytechnique de Toulouse, 31029 Toulouse (FR); Université de Toulouse, 31062 Toulouse Cedex 9 (FR); INSA Rouen Normandie, 76801 Saint-Etienne du Rouvray (FR); Centre National de la Recherche Scientifique, 75016 Paris (FR); Universite de Rouen Normandie, 76821 Mont Saint Aignan Cedex (FR)
(72) Inventeur: BOURGEOIS, Florent, 31432 TOULOUSE Cedex 4 (FR); CYR, Martin, 31077 TOULOUSE Cedex 4 (FR); ESTEL, Lionel, 76800 SAINT-ÉTIENNE-DU-ROUVRAY (FR); GURDJOS, Célia, 31200 TOULOUSE (FR)
(74) Mandataire: IPAZ
(86) Numéro de dépôt international: PCT/EP2023/065743
(87) Numéro de publication internationale: WO 2023/242165

(56) Documents cités:
- EP-A1- 3 498 681
- WO-A1-2020/217232
- CN-A- 112 573 851

## Description

La présente invention concerne un procédé de recyclage de déchets de béton issus de la construction et/ou de la déconstruction mettant en œuvre au moins une étape de traitement micro-ondes de blocs de béton, au moins une étape de traitement mécanique, et au moins une étape de carbonatation de granulats de béton recyclé et/ou de fines de béton recyclé, une installation de recyclage mettant en œuvre ledit procédé de recyclage, et des granulats de béton recyclé obtenus selon les étapes de traitement micro-ondes de blocs de béton et de traitement mécanique.

Le béton fait partie des matériaux fabriqués les plus consommés au monde. Il comprend majoritairement des granulats (graviers, gravillons), en mélange avec du ciment, du sable, et de l'eau. En particulier, la consommation annuelle de granulats en France est de 350 millions de tonnes, soit 6 tonnes par habitant par an et 17 kg par habitant par jour. Les projections montrent que la demande en granulats ne cesse d'augmenter, notamment pour la réalisation de nouveaux bâtiments. Les granulats naturels (GN) sont généralement obtenus en exploitant des gisements de sables et de graviers d'origine alluvionnaire, terrestre ou marine. Les granulats naturels (GN) ne sont pas une ressource renouvelable et bien qu'ils soient techniquement illimités, ils sont de moins en moins accessibles pour des raisons sociétales et environnementales. En particulier, il s'avère de plus en plus difficile d'ouvrir de nouvelles carrières pour satisfaire la demande en granulats naturels (GN), celles-ci induisant des nuisances pour les habitants à proximité (bruit, poussières, circulation accrue... ).

En parallèle, le volume des matériaux de déconstruction ou démolition des bâtiments et infrastructures augmente et va devenir de plus en plus important dans les prochaines années. En effet, les bâtiments édifiés pendant la reconstruction dans les années 1950 arrivent peu à peu en fin de vie, ce qui signifie que les volumes de béton à recycler vont devenir considérables.

Par ailleurs, la calcination des ressources minérales naturelles calcaires nécessaires à la fabrication du ciment est responsable de près de la moitié des émissions de CO₂ associées à la fabrication du béton, l'un des matériaux les plus émetteurs de CO₂ produits par l'homme.

Le recours au recyclage du béton ou des ouvrages de maçonnerie (e.g. déchets de construction et de démolition) a été proposé afin d'éviter leur enfouissement en décharge, de réduire la dépendance à l'égard des gisements naturels, et de fabriquer de nouvelles structures de béton en préservant les ressources naturelles de granulats.

Le recyclage des déchets de béton de construction et de démolition est généralement effectué par concassage de blocs de béton pour former des granulats de béton recyclé (GBR). Un criblage peut également être effectué pour séparer les GBR des fines. Cependant, les procédés de recyclage actuellement proposés ne donnent pas entière satisfaction. La séparation des GN du mortier résiduel est loin d'être optimisée. Les GBR généralement obtenus sont composés de GN majoritairement associés à une quantité significative de mortier résiduel provenant du béton d'origine. En particulier, le mortier résiduel se retrouve en grande partie parmi les GN soit adhérant à ceux-ci, soit sous la forme de granulats de taille au moins équivalente à celle des granulats naturels, empêchant alors l'obtention de GN propres. Compte-tenu du fort taux de pâte de ciment adhérente, de tels GBR ont une qualité médiocre par rapport à des GN : ils ont une absorption d'eau plus élevée et des propriétés mécaniques plus faibles (résistance aux chocs moindre et/ou friabilité plus élevée) que les GN. Un béton fabriqué à partir de GBR malaxés dans des conditions usuelles voit son aptitude à la mise en œuvre chuter lors du transport en toupie, et cela peut aller parfois jusqu'à le rendre impropre à l'usage une fois arrivé à destination. La norme béton NF EN 206/CN actuelle impose d'ailleurs une proportion maximale de GBR pour substituer les granulats naturels lors de la fabrication d'un nouveau béton, et cette proportion varie selon le type de GBR et notamment de leurs constituants, ainsi que selon la classe d'exposition des ouvrages à construire. De par la mauvaise qualité de ces GBR, ils sont actuellement principalement utilisés dans les ouvrages à faible valeur ajoutée, notamment dans les terrassements routiers comme remblai à faible valeur ajoutée, comme sous-couches routières, ou comblement de carrières. Or, les capacités de recyclage dans la filière routière ne sont pas illimitées et cette forme de recyclage en matériaux de moindre valeur (bien connue sous l'anglicisme « downcycling ») ne répond pas de manière satisfaisante aux critères du développement durable.

Par ailleurs, le concassage peut fracturer significativement les GN, contribuant à une réduction de la taille des GN par rapport à leur distribution granulométrique initiale et un enrichissement des fines en fragments de GN. Ainsi, les fines recyclées obtenues présentent une composition qui les rend plus difficilement valorisables et/ou recyclables. Enfin, comme une grande partie de la pâte de ciment adhère ou est associée aux GBR, la quantité de fines produite est faible par rapport à la quantité de mortier présente dans le béton. Les installations industrielles en place actuellement ne valorisent généralement pas la fraction fine qui est considérée comme un déchet.

Des solutions ont été proposées pour améliorer les performances des GBR, et ainsi évoluer vers une norme permettant l'augmentation de leur proportion au sein d'une nouvelle structure de béton, notamment à forte valeur ajoutée. On peut par exemple citer le traitement chimique à base de polymères, l'utilisation d'agents de renfort minéraux, ou la carbonatation (e.g. utilisation de bactéries induisant la formation de carbonate de calcium).

En particulier, la demande internationale WO2020/217232 décrit un mélange de béton mouillé comprenant un ciment hydraulique, de l'eau et des granulats de béton recyclé carbonatés. Les granulats de béton recyclé carbonatés sont obtenus selon un procédé comprenant au moins une étape de concassage, au moins une étape de séparation par tailles, et une étape de carbonatation, la carbonatation pouvant être effectuée en même temps que l'étape de concassage ou l'étape de séparation par tailles, ou après l'une de ces étapes. Dans les exemples, la carbonatation est effectuée après concassage d'un mortier contenant du sable et du ciment pour former des granulats de béton recyclé grossiers de 5-20 mm puis exposition à une atmosphère enrichie en dioxyde de carbone (CO₂) et ayant une humidité relative de 55-65%, pour former des granulats de béton recyclé carbonatés. Ces granulats de béton recyclé carbonatés sont ensuite utilisés en mélange avec du sable, de l'eau et du ciment pour former un nouveau béton. Les granulats de béton recyclé de WO2020/217232 ont la composition d'un mortier (mélange de sable et de ciment). Les GBR obtenus après carbonatation ne sont pas propres et présentent une qualité médiocre par rapport à des GN.

Par ailleurs, quelques publications envisagent l'utilisation des fines de béton directement dans le cru de cimenterie, en tant que matière première pour la fabrication de clinker. À titre d'exemple, Schoon et al. [Cement and Concrete Composites, 58, 2015, 70-80] décrivent l'incorporation de fines de béton recyclés (5-15%) dans un cru cimentier en remplacement des matériaux classiques siliceux. Différentes configurations techniques ont été utilisées pour séparer la fraction de mortier des granulats, et pour séparer les fines générées du sable recyclé. Ceci étant, *Schoon et* al. indiquent qu'il est difficile de collecter une grande quantité de fines.

CN112573851 décrit le recyclage du béton de construction et/ou de démolition avec l'utilisation d'un accélérateur de dissociation comme agent mouillant en phase liquide avant le traitement micro-ondes qui permet de faire pénétrer l'accélérateur dans les micropores du ciment.

Par conséquent, il existe toujours un besoin en procédés de recyclage qui permettent d'obtenir des granulats de béton recyclé les plus propres possibles (i.e. avec le moins de mortier résiduel possible) et/ou ayant une qualité améliorée, afin de pouvoir les utiliser en plus grande proportion pour former une nouvelle structure de béton. Il existe également un besoin en procédés de recyclage qui permettent d'obtenir une plus grande quantité de fines de béton recyclé de bonne qualité. En particulier, il existe un besoin en procédés de recyclage qui permettent de recycler toutes les parties du béton qui sont valorisables, à savoir aussi bien les granulats naturels (GN) que le mortier qui les entoure.

Le but de la présente invention est par conséquent de pallier les inconvénients de l'art antérieur et notamment de fournir un procédé de recyclage de déchets de béton issus de la construction et/ou de la déconstruction permettant d'accéder à des granulats récyclés GBR présentant une meilleure qualité, notamment en termes d'absorption d'eau et/ou de propriétés mécaniques, et/ou un taux de propreté plus élevé ; et des fines recyclées en plus grande quantité et/ou de meilleure qualité, notamment en termes d'activité pouzzolanique et/ou hydraulique, qui soit simple, industrialisable, utilisant des matières premières abondantes, et qui soit bénéfique sur le plan environnemental.

L'invention a pour premier objet un procédé de recyclage d'un béton issu de la construction et/ou de la démolition, caractérisé en ce qu'il comprend au moins les étapes suivantes :
i) une ou plusieurs étape(s) de traitement par micro-ondes de blocs de béton de construction et/ou de démolition ayant une taille centimétrique, pour former des blocs de béton micro-fracturés,
ii) une ou plusieurs étape(s) de traitement mécanique permettant d'extraire à partir desdits blocs de béton micro-fracturés, des granulats recyclés (dénommés ci-après GBR) comprenant des granulats naturels (GN) nus et des granulats naturels (GN) associés à une matrice cimentaire résiduelle adhérente (ou mortier résiduel) ; et des fines recyclées,
et en ce qu'il comprend en outre :
iii) une ou plusieurs étape(s) de carbonatation des granulats recyclés, en présence de dioxyde de carbone, pour former des granulats recyclés carbonatés (dénommés ci-après GBRC), et/ou
iv) une ou plusieurs étape(s) de carbonatation des fines recyclées, en présence de dioxyde de carbone, pour former des fines recyclées carbonatées.

Le procédé de l'invention est simple, facile à mettre en œuvre, et conduit :
- à l'issue des étapes i), ii) et iii) à des granulats recyclés carbonatés (GRBC), les granulats recyclés carbonatés présentant une plus grande propreté, et/ou une meilleure qualité, notamment en termes d'absorption d'eau et/ou de propriétés mécaniques ; et/ou
- à l'issue des étapes i), ii) et iv) à des fines recyclées carbonatées comprenant une grande quantité de pâte de ciment et/ou présentant une meilleure qualité, notamment en termes d'activité pouzzolanique suite à la production par l'étape de carbonatation de silice amorphe particulièrement réactive en milieu cimentaire.

Le procédé peut mettre en œuvre la carbonatation des GBR [étape iii)], la carbonatation des fines recyclées [étape iv)], ou à la fois la carbonatation des GBR et des fines recyclées [étapes iii) et iv)].

Par ailleurs, le procédé est industrialisable, utilise des matières premières abondantes (déchets de béton de construction ou de démolition) et réduit l'impact environnemental puisqu'il permet de recycler le béton de construction non utilisé ou le béton de démolition, tout en garantissant l'utilisation ou la valorisation du CO₂. Le procédé de l'invention est un procédé de recyclage intégral du béton en ce qu'il permet de recycler tout le béton initial, i.e. les granulats naturels (GN) ainsi que les fines d'un autre côté.

Le procédé est un procédé de recyclage d'un béton issu de la construction et/ou de la démolition, notamment dans la filière du bâtiment et des travaux publics. En d'autres termes, le béton peut être un déchet de béton de construction de bâtiments et/ou de structures de chaussées, un rebus de production de béton, un béton de démolition de bâtiments ou de structures de chaussées, ou un de leurs mélanges.

### Définitions

Le terme "ciment" désigne dans l'invention un liant hydraulique, c'est-à-dire un matériau minéral finement moulu qui, gâché avec de l'eau, forme une pâte qui fait prise et durcit par suite de réactions et de processus d'hydratation et qui, après durcissement, conserve sa résistance et sa stabilité même sous l'eau (définition selon la norme EN 197-1).

Le terme "pâte de ciment" (également dénommé ci-après « PdC ») désigne dans l'invention un mélange de ciment et d'eau, qui durcit grâce à la réaction d'hydratation. La pâte de ciment peut éventuellement contenir un ou plusieurs additifs. La quantité de pâte de ciment qui adhère aux GBR est un critère de propreté des GBR.

Le terme "béton" désigne dans l'invention un mélange de ciment, de granulats (sable et gravillons) et d'eau. Il s'agit du matériau initial qui contient l'ensemble des constituants (granulats et pâte de ciment), que l'on cherche à récupérer.

Le terme "granulats naturels (GN)" désigne dans l'invention des particules de sable et de gravillons naturels produits par exploitation des gisements de sables et graviers d'origine alluvionnaire, terrestre ou marine.

Le terme "granulats de béton recyclé (GBR)" désigne dans l'invention des particules de sable et gravillons produites à partir d'un béton et réutilisées en remplacement de GN, pour fabriquer un béton ou pour toute autre application. Dans l'invention, le terme "granulats de béton recyclé (GBR)" est également dénommé « granulats recyclés ».

Le terme "granulats de béton recyclé carbonatés (GBRC)" désigne dans l'invention des granulats de béton carbonatés par un procédé dédié de carbonatation accélérée. Dans l'invention, le terme " granulats de béton carbonatés (GBRC)" est également dénommé « granulats recyclés carbonatés ».

Le terme "mortier résiduel" désigne dans l'invention un mélange de pâte de ciment et de GN de taille inférieure à la maille granulométrique du GBR considéré. Le mortier résiduel se retrouve principalement adhérent à la surface du GBR considéré. Ainsi, la définition de mortier résiduel varie selon la fraction granulométrique du GBR considéré. Soient G_{M} la maille supérieure et Gₘ la maille inférieure d'une fraction granulométrique G_{M}-Gₘ de GBR, alors le mortier résiduel associé à cette fraction granulométrique de GBR contient un mélange de pâte de ciment et de GN de taille < Gₘ. Dans l'invention, le terme "mortier résiduel" est également dénommé « matrice cimentaire résiduelle ».

Le terme "fines" désigne dans l'invention un mélange de pâte de ciment et de GN de taille inférieure à la plus petite taille Gₘ de la fraction la plus fine des GBR produits par le procédé de recyclage du béton.

Le terme "carbonatation accélérée" désigne dans l'invention un procédé de carbonatation qui opère à une concentration en CO₂ 250 à 12000 fois supérieure à celle de l'atmosphère terrestre (415 ppm), ce qui conduit à une cinétique de carbonatation de l'échelle de quelques minutes contre celle d'années pour la carbonatation naturelle. Dans le mortier résiduel, seule la pâte de ciment se carbonate, les GN contenus dans le mortier résiduel ne se carbonatant pas. Dans cette invention, le terme "carbonatation" utilisé seul est synonyme de "carbonatation accélérée". Le terme « carbonatation accélérée » ou « carbonatation » s'oppose donc au terme « carbonatation naturelle ».

Dans les GBR de l'invention, les termes « granulats naturels nus » et « granulats naturels propres » et « GBR propres » sont synonymes. Les granulats naturels nus dans les GBR de l'invention comprennent de préférence moins de 5% en masse de PdC, de façon particulièrement préférée au plus 4% en masse de PdC, et de façon plus particulièrement préférée au plus 3% en masse de PdC, par rapport à la masse totale des granulats naturels nus.

Dans les GBR de l'invention, les termes « granulats naturels associés à un mortier résiduel adhérent » et « granulats naturels non propres » et « GBR non propres » sont synonymes. Les granulats naturels associés à un mortier résiduel adhérent dans les GBR de l'invention comprennent de préférence de 5% à 30% en masse de PdC, de façon particulièrement préférée de 7 à 25% en masse de PdC, et de façon plus particulièrement préférée de 10 à 20% en masse de PdC, par rapport à la masse totale des granulats naturels associés à un mortier résiduel adhérent.

### Etape i)

Les blocs de béton de construction et/ou de démolition centimétriques mis en œuvre dans l'étape i) comprennent des granulats naturels nus (i.e. des granulats naturels non associés à une matrice cimentaire résiduelle adhérente ou exempts de matrice cimentaire résiduelle adhérente) tels que des gravillons ou du sable (i.e. des gravillons, du sable « nus » ou non associés à une, ou exempts de, matrice cimentaire résiduelle adhérente), ainsi que des granulats naturels tels que des gravillons, du sable, associés à une matrice cimentaire résiduelle adhérente. En d'autres termes, les blocs de béton de construction et/ou de démolition centimétriques mis en œuvre dans l'étape i) comprennent des granulats naturels (GN) tels que des gravillons et/ou du sable, et de la pâte de ciment. Au sein desdits blocs de béton de construction et/ou de démolition centimétriques, les GN sont ainsi associés à de la pâte de ciment pour former lesdits blocs centimétriques.

Dans l'invention, la matrice cimentaire résiduelle adhérente comprend par exemple du ciment, du sable, de l'eau, et éventuellement un ou plusieurs additifs. À la place du sable, des gravillons ou un mélange de sable et de gravillons peu(ven)t être présent(s). Comme expliqué ci-avant, la fraction granulométrique du sable et/ou des gravillons dans la matrice cimentaire est inférieure à la fraction granulométrique des granulats naturels GN auxquels ladite matrice cimentaire est associée.

L'étape i) permet la formation d'un réseau primaire de fractures au sein des blocs de béton, et plus particulièrement autour des granulats naturels (GN) (libération texturale des granulats) ; puis la formation d'un réseau secondaire de fractures dans la pâte de ciment PdC de la matrice cimentaire (libération physique des agrégats et fracturation dense de la pâte de ciment PdC). Cela conduit à une fracturation sélective du béton, permettant de séparer les granulats naturels (GN) de la majeure partie de la PdC de la matrice cimentaire, sans endommagement significatif des granulats naturels (GN).

En d'autres termes, la fracturation secondaire produit un réseau (secondaire) dense de microfractures qui innerve la pâte de ciment de la matrice cimentaire, qu'elle adhère ou non à la surface des granulats naturels ; elle permet la libération de la pâte de ciment de la matrice cimentaire dans une fraction granulométrique fine, ce qui favorise l'étape d'extraction ii) suivante, ainsi que l'étape iii) de carbonatation de la pâte de ciment de la matrice cimentaire qui est associée à certains granulats naturels et adhère à la surface de ceux-ci et/ou l'étape iv) de carbonatation de la pâte de ciment présente en grandes quantités dans les fines recyclées.

La formation des réseaux de fractures primaires et secondaires mentionnés ci-dessus permet ainsi de favoriser l'étape suivante ii) de libération sélective des granulats naturels (GN) contenus dans le béton de construction et/ou de démolition, et par conséquent de favoriser la séparation des GN d'un côté, et des fines de l'autre sans toutefois dégrader les GN.

En d'autres termes, plus le nombre de microfractures par unité de volume dans la pâte de ciment de la matrice cimentaire est important, plus les granulats de béton recyclé (GBR) obtenus sont propres (i.e. fort taux de GN et faible taux de matrice cimentaire résiduelle ou mortier résiduel adhérent, voire sans matrice cimentaire résiduelle ou mortier résiduel adhérent), plus les fines comprennent une grande quantité de PdC, et plus le procédé est performant, et notamment les étapes ii), iii) et iv) suivantes.

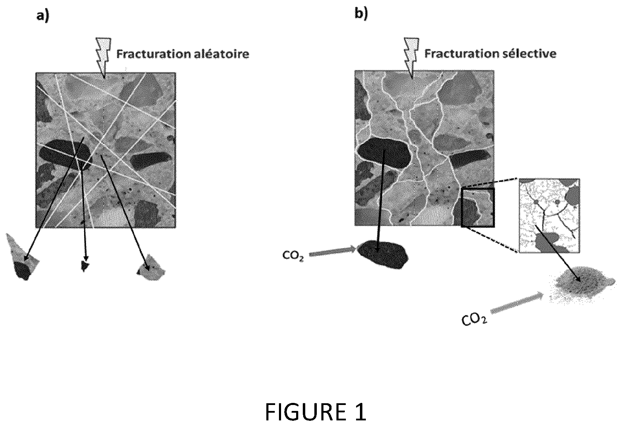

À la différence d'un concasseur qui fracture le béton de manière aléatoire (comme explicité ci-après dans la figure 1), le traitement micro-ondes permet de fragiliser sélectivement la pâte de ciment PdC de la phase cimentaire, sans altération significative de la structure des granulats naturels GN. L'intégrité des granulats naturels GN est par conséquent préservée, et au moins 75% en masse de la PdC des blocs de béton de construction et/ou de démolition centimétriques peut alors se retrouver dans les fines recyclées grâce à la combinaison des étapes i) et ii).

Le traitement micro-ondes de l'étape i) peut être effectué à une puissance incidente suffisante pour induire la fracturation des blocs de béton.

De préférence, le traitement micro-ondes de l'étape i) est effectué à une puissance allant de 1 kW à 50 kW, de préférence allant de 5 kW à 40 kW, et de façon particulièrement préférée de 5 kW à 10 kW.

Ces puissances sont particulièrement appropriées pour traiter 1 t/h de blocs de béton.

De préférence, le traitement micro-ondes de l'étape i) est effectué pendant une durée (durée d'exposition) allant de 30 s à 10 min environ, et de façon particulièrement préférée de 1 min à 5 min environ.

Dans l'invention, le terme « taille centimétrique » relatif aux blocs de béton de construction et/ou de démolition signifie préférentiellement que les blocs de béton de construction et/ou de démolition ont une taille d'au plus 10 cm environ, de façon particulièrement préférée d'au plus 7 cm environ, et de de façon plus particulièrement préférée d'au plus 5 cm environ.

De préférence, les blocs de béton de construction et/ou de démolition ont une taille d'au moins 1 cm environ, de façon particulièrement préférée d'au moins 2 cm environ, et de façon plus particulièrement préférée d'au moins 3 cm environ.

L'étape i) peut être réalisée en faisant passer les blocs de béton dans un tunnel micro-ondes.

Le traitement micro-ondes i) peut être effectué à une fréquence allant de 915 MHz à 2450 MHz environ et de façon particulièrement préférée à une fréquence de 915 MHz ou de 2450 MHz environ. Ces fréquences sont des fréquences moyennes dont les bornes sont respectivement de 902-928 MHz et de 2400-2500 MHz.

Le traitement micro-ondes i) peut être effectué en mode continu ou par impulsions (par exemple avec des impulsions en créneaux symétriques de 1 seconde minimum).

Les modes de propagation en ondes progressives ou stationnaires peuvent être utilisés suivant la taille des morceaux de béton à traiter (morceaux de béton à traiter inférieurs à 5 cm : ondes stationnaires, morceaux de béton à traiter supérieurs à 5 cm : ondes progressives).

Le traitement micro-ondes i) pourra être opéré *via* des ondes guidées ou des antennes à l'intérieur de cavités réfléchissantes.

Le traitement micro-ondes i) entraine un séchage de la matière, et l'eau évaporée peut avantageusement être récupérée, notamment pour être réutilisée lors des étapes ii) à iv) suivantes.

À l'issue de l'étape i), les blocs de béton sont dits « micro-fracturés », de par le fait que la pâte de ciment contenue dans lesdits blocs de béton est massivement microfracturée. Lesdits blocs de béton obtenus à l'issue de l'étape i) comprennent par conséquent une pâte de ciment microfracturée.

### Etape ii)

Au cours de l'étape ii), lesdits blocs de béton micro-fracturés issus de l'étape i) subissent une ou plusieurs étape(s) de traitement mécanique.

Grâce à l'étape i), une contrainte mécanique qui privilégie les efforts de cisaillement lors de l'étape ii) permet de propager les fractures, fragmenter les blocs de béton micro-fracturés tout en limitant la fracture des GN, et libérer des granulats recyclés GBR comprenant des granulats naturels nus et des granulats naturels associés à une matrice cimentaire résiduelle adhérente d'une part, et des fines recyclées d'autre part.

L'étape ii) permet d'extraire à partir desdits blocs de béton micro-fracturés, des granulats recyclés GBR comprenant des granulats naturels nus et des granulats naturels associés à une matrice cimentaire résiduelle adhérente (ou mortier résiduel adhérant) d'une part ; et des fines recyclées d'autre part. À l'issue de l'étape ii), les granulats recyclés sont séparés des fines recyclées, et au moins 75% en masse de la PdC contenue dans le béton initial à recycler se retrouve dans les fines recyclées.

À l'issue de l'étape ii), on obtient alors une fraction F₁ de granulats recyclés GBR comprenant des granulats naturels nus et des granulats naturels associés à une matrice cimentaire résiduelle adhérente (ou mortier résiduel adhérent) ; et une fraction F₂ de fines recyclées.

Les granulats recyclés GBR ont de préférence une granulométrie supérieure ou égale à 1 mm environ.

Les granulats naturels nus ont de préférence une granulométrie supérieure ou égale à 1 mm environ.

Les granulats naturels associés à une matrice cimentaire résiduelle adhérente (ou mortier résiduel adhérent) ont de préférence une granulométrie supérieure ou égale à 1 mm environ.

Selon une forme de réalisation préférée de l'invention, les granulats naturels nus (respectivement les granulats naturels associés à une matrice cimentaire résiduelle adhérente ou mortier résiduel adhérent) sont choisis parmi des gravillons, des sables de granulométrie supérieure ou égale à 1 mm environ, et un de leurs mélanges.

Les gravillons sont généralement définis comme ayant une granulométrie supérieure à 4 mm environ.

Les sables sont généralement définis comme ayant une granulométrie inférieure ou égale à 4 mm environ.

Dans la présente invention, la granulométrie des GBR, gravillons, et sables est déterminée par des méthodes bien connues de l'homme du métier, et notamment par tamisage (par exemple selon la norme NF EN 933-1) (méthode de laboratoire) ou par criblage (méthode industrielle).

La matrice cimentaire résiduelle adhérente (ou mortier résiduel adhérent) associée aux granulats naturels GN comprend des granulats naturels GN ayant de préférence une granulométrie inférieure à 1 mm environ.

Les fines recyclées (fraction F₂) comprennent généralement de la pâte de ciment, et des granulats naturels GN tels que du sable, de préférence de granulométrie inférieure à 1 mm environ.

Les fines recyclées (fraction F₂) ont de préférence une granulométrie inférieure à 1 mm.

Dans la fraction F₂, le sable et la pâte de ciment peuvent être sous la forme d'un mortier, sous formes individuelles, ou en mélange sous la forme d'un mortier et sous formes individuelles.

### Etape ii-1)

L'étape ii) comprend de préférence au moins une étape ii-1) de broyage des blocs de béton micro-fracturés.

L'étape ii-1) de broyage des blocs de béton micro-fracturés peut être effectuée à l'aide d'au moins un concasseur percussif (e.g. un concasseur à mâchoires, un concasseur giratoire, un concasseur à cône, ou un concasseur à percussion), ou un concasseur non percussif (e.g. broyeur à cylindres tels qu'un broyeur à simple ou doubles cylindres, ou broyeur à rouleaux à haute pression, également bien connu sous l'acronyme HPRC pour « High Pressure Rolls Crusher »).

De préférence, l'étape ii-1) de broyage des blocs de béton micro-fracturés est une étape de broyage non percussif. Dans ce mode de réalisation, l'étape ii-1) de broyage des blocs de béton micro-fracturés met de préférence en œuvre au moins un concasseur non percussif.

Un concasseur non percussif présente l'avantage de mettre en œuvre une action continue de cisaillement compressif. Il évite ainsi l'endommagement excessif des granulats naturels GN et/ou préserve l'intégrité de leurs propriétés granulométriques et mécaniques.

Le concasseur non percussif est de préférence un broyeur à cylindres tel qu'un broyeur simple ou double cylindres. Le broyeur à cylindres peut être à cylindres lisses ou crantés.

Le concasseur de type broyeur à cylindres permet de produire une granulométrie maximale particulière correspondant à celle des granulats naturels GN présents dans le béton initial à recycler, par un réglage adapté de ses paramètres opératoires, en particulier le débit d'alimentation, la vitesse de rotation du ou des cylindres, l'écartement entre les cylindres et/ou la pression hydraulique appliquée.

L'écartement des cylindres est adapté à la granulométrie maximale des granulats d'origine (i.e. des granulats naturels GN dans le béton initial à recycler), de manière notamment à minimiser leur fragmentation.

Le procédé peut comprendre plusieurs étapes de broyage ii-1), en particulier en effectuant :
- plusieurs étapes de broyage ii-1) après l'étape i) de traitement micro-ondes, ou
- plusieurs séquences successives d'une étape i) de traitement micro-ondes et d'une étape de broyage ii-1).

Lorsque plusieurs étapes de broyage ii-1) sont effectuées après l'étape i), une série de concasseurs non percussifs tels que des broyeurs à cylindres peut être mise en œuvre, et permettre de produire successivement des granulométries maximales de GBR de plus en plus fines, par un réglage adapté des paramètres opératoires des concasseurs successifs, en particulier le débit d'alimentation, la vitesse de rotation du ou des cylindres, l'écartement des cylindres et/ou la pression hydraulique appliquée.

L'écartement des cylindres peut décroitre continûment, de manière à produire une granulométrie de granulats GBR de plus en plus resserrée et obtenir les granulats GBR les plus propres possibles (i.e. fort taux de GN et faible taux de mortier résiduel adhérent ou de matrice cimentaire adhérente), et optimiser ainsi la production de fines recyclées.

Lorsque plusieurs séquences successives d'étapes i) et ii-1) sont effectuées, un seul concasseur non percussif tel qu'un broyeur à cylindres peut être mis en œuvre après chaque étape i), et permet de produire successivement des granulométries maximales de GBR de plus en plus fines, par un réglage adapté de ses paramètres opératoires, en particulier le débit d'alimentation, la vitesse de rotation du ou des cylindres, l'écartement des cylindres et/ou la pression hydraulique appliquée.

L'étape de broyage ii-1) est avantageusement réalisée en voie sèche. La voie sèche est particulièrement adaptée du fait que l'étape i) précédente de traitement micro-ondes contribue au séchage de la matière.

Grâce à une ou plusieurs étape(s) de broyage ii-1), on obtient des granulats recyclés GBR (granulats naturels avec ou sans matrice cimentaire résiduelle adhérente) qui présentent de préférence une granulométrie G_{M} (qui correspond à la granulométrie maximale des granulats naturels GN du béton initial à recycler) d'au plus 45 mm environ, ou d'au plus 25 mm environ, ou d'au plus 11,2 mm environ, ou d'au plus 8 mm, ou d'au plus 4 mm, notamment selon l'application envisagée et/ou la granulométrie des granulats naturels GN présents dans le béton initial à recycler (i.e. G_{M} ≤ 45 mm, ou G_{M} ≤ 25 mm, ou G_{M} ≤ 11,2 mm ou G_{M} ≤ 4 mm).

De préférence, les granulats recyclés GBR obtenus à l'issue de l'étape de broyage (granulats naturels avec ou sans matrice cimentaire résiduelle adhérente) ont une granulométrie minimale Gₘ d'au moins 1 mm environ (Gₘ ≥ 1 mm).

### Etape ii-2)

L'étape ii) peut comprendre en outre, notamment après l'étape ii-1), au moins une étape ii-2) de criblage (également appelée tamisage). Cette étape ii-2) permet un tri granulométrique des granulats GBR et des fines.

L'étape de criblage ii-2) peut être effectuée en voie sèche ou en voie humide, et de préférence en voie humide.

L'étape de criblage ii-2) peut être effectuée à l'aide de tout type de crible ou tamiseur, vibrant, giratoire, ou rotatif, et de préférence à l'aide d'un crible rotatif ou d'un tamiseur giratoire. Un crible rotatif est également connu sous le nom de cribleur rotatif ou de tamis rotatif ou de crible à trommel ou de trommel cribleur.

L'étape de criblage ii-2) permet de séparer la fraction F₁ de granulats recyclés GBR de la fraction F₂ de fines recyclées ; et éventuellement de séparer lesdits granulats recyclés GBR selon leur granulométrie au sein de la fraction F₁.

Le procédé comprend de préférence plusieurs étapes de criblage ii-2).

Le(s) crible(s) utilisé(s) lors de(s) l'étape(s) de criblage ii-2) comprend (comprennent) une maille d'ouverture adaptée pour permettre une (de) telle(s) séparation(s).

Le crible (la série de cribles) a de préférence une maille adaptée au concasseur (à la série des concasseurs) utilisé(e) dans l'étape ii-1) ou les étapes ii-1).

Selon un mode de réalisation préféré de l'invention, l'étape ii-2) comprend une première étape de criblage ii-2a) permettant d'isoler des granulats recyclés GBR ayant une granulométrie G₁ telle que Gₘ ≤ G₁ ≤ Gₘ, ou une fraction granulométrique G_{1'}-G₁ telle que Gₘ ≤ G_{1'} < G₁ ≤ G_{M}.

À titre d'exemple, les granulats recyclés GBR isolés (i.e. séparés) au cours de la première étape de criblage ii-2a) ont une granulométrie G₁ d'au moins 4 mm environ.

À titre d'exemple, les granulats recyclés GBR isolés (i.e. séparés) au cours de la première étape de criblage ii-2a) ont une granulométrie G₁ d'au plus 45 mm environ, ou d'au plus 25 mm environ, ou d'au plus 11,2 mm environ, ou d'au plus 8 mm, notamment selon l'application envisagée et/ou la granulométrie des granulats naturels présents dans le béton initial à recycler.

À titre d'exemple, la première étape de criblage ii-2a) peut permettre d'isoler des GBR ayant une fraction granulométrique donnée : 4-8 mm, ou 8-11,2 mm ou 11,2-25 mm ou 25-45 mm.

Les bornes des fractions granulométriques sont données à titre indicatif uniquement et toute autre borne peut être utilisée selon l'application envisagée et/ou la granulométrie des GN présents dans le béton initial à recycler.

Au cours de la première étape de criblage ii-2a), les granulats recyclés GBR de granulométrie G₁ (Fraction F₁ₐ) sont séparés des fines recyclées (Fraction F₂ₐ), et éventuellement de granulats recyclés GBR de granulométrie inférieure (Fraction F_{1b}, Fraction F_{1c}, etc...).

Les granulats recyclés GBR de granulométrie G₁ comprennent des granulats naturels nus et des granulats naturels associés à une matrice cimentaire résiduelle (mortier résiduel), de préférence adhérant auxdits granulats naturels.

L'étape ii-2) peut comprendre en outre une deuxième étape de criblage ii-2b) permettant d'isoler des granulats recyclés GBR ayant une granulométrie G₂ telle que Gₘ ≤ G₂ < G₁, ou une fraction granulométrique G_{2'}-G₂ telle que Gₘ ≤ G_{2'} < G₂ ≤ G_{1'} < G₁ ≤ G_{M}.

À titre d'exemple, les granulats recyclés isolés GBR au cours de la deuxième étape de criblage ii-2b) ont une granulométrie G₂ d'au plus 4 mm environ.

À titre d'exemple, lorsque la première étape de criblage ii-2a) a permis d'isoler des GBR ayant une fraction granulométrique 4-8 mm, la deuxième étape de criblage ii-2a) peut permettre d'isoler des GBR ayant une fraction granulométrique 1-4 mm ; lorsque la première étape de criblage ii-2a) a permis d'isoler des GBR ayant une fraction granulométrique 8-11,2 mm, la deuxième étape de criblage ii-2a) peut permettre d'isoler des GBR ayant une fraction granulométrique 4-8 mm ; lorsque la première étape de criblage ii-2a) a permis d'isoler des GBR ayant une fraction granulométrique 11,2-25 mm, la deuxième étape de criblage ii-2a) peut permettre d'isoler des GBR ayant une fraction granulométrique 8-11,2 mm ; lorsque la première étape de criblage ii-2a) a permis d'isoler des GBR ayant une fraction granulométrique 25-45 mm, la deuxième étape de criblage ii-2a) peut permettre d'isoler des GBR ayant une fraction granulométrique 11,2-25 mm.

De préférence, les granulats recyclés GBR isolés au cours de la deuxième étape de criblage ii-2b) ont une granulométrie G₂ d'au moins 1 mm environ.

Au cours de la deuxième étape de criblage ii-2b), les granulats recyclés GBR de granulométrie G₂ (Fraction F_{1b}) sont séparés des fines recyclées (fraction F_{2b}), et éventuellement de granulats recyclés de granulométrie inférieure (Fraction F_{1c}, etc...).

Les granulats recyclés GBR de granulométrie G₂ comprennent des granulats naturels nus et des granulats naturels associés à une matrice cimentaire résiduelle (mortier résiduel), de préférence adhérant auxdits granulats naturels.

L'étape ii) peut ainsi comprendre une ou plusieurs étapes de criblage ii-2). En particulier, une ou plusieurs étapes de criblage [étapes ii-2a), ii-2b), ii-2c) etc...] peuvent être requises pour séparer au maximum les granulats recyclés GBR des fines recyclées. Cela peut notamment dépendre de la dispersion granulométrique des granulats naturels initiaux GN utilisés dans le béton de construction et/ou de démolition.

Le procédé de l'invention, et notamment l'étape ii), peut comprendre plusieurs étapes de broyage ii-1) et plusieurs étapes de criblage ii-2).

Dans ce mode de réalisation, l'étape ii) peut comprendre :
- plusieurs étapes de broyage ii-1) suivies de plusieurs étapes de criblage ii-2), ou
- plusieurs séquences successives, d'une étape de broyage ii-1) et d'une étape de criblage ii-2).

L'étape ii) comprend de préférence plusieurs séquences successives, d'une étape de broyage ii-1) et d'une étape de criblage ii-2).

À l'issue de l'étape ii), et notamment des étapes ii-1) et ii-2), les granulats recyclés isolés ou récupérés GBR ont une structure au plus proche de celle des granulats naturels GN du béton initial de démolition et/ou de construction.

Le procédé de l'invention résultant des étapes i) et ii) permet ainsi d'une part d'obtenir des granulats GBR ayant un taux de propreté élevé, et d'autre part d'obtenir une grande quantité de fines puisque la grande majorité des GBR a été débarrassée du mortier résiduel (et par conséquent de la pâte de ciment que le mortier contient) adhérant aux GN.

Le procédé peut comprendre en outre après l'étape ii), lorsque le procédé comprend plusieurs étapes de criblage ii-2), une étape au cours de laquelle les différentes fractions de fines issues des différentes étapes de criblage (F₂ₐ, F_{2b}, F_{2c}, etc...) sont rassemblées.

La réutilisation de cette grande quantité de fines de déchets de construction et de démolition de béton, comme addition minérale pour réduire la demande du béton en ciment et/ou comme constituant du cru utilisé pour produire le ciment, est un vecteur potentiel de réduction des émissions de CO₂ et de demande en ressources naturelles du béton pour sa fabrication.

À l'issue de l'étape ii), et notamment des étapes ii-1) et ii-2), les granulats de béton recyclé GBR obtenus d'une fraction granulométrique donnée, supérieure ou égale à 1 mm, comprennent préférentiellement de 65 à 95% en masse de GN de ladite fraction granulométrique donnée, plus préférentiellement de 70 à 90% en masse de GN de ladite fraction granulométrique donnée, et encore plus préférentiellement de 75 à 85% en masse de GN de ladite fraction granulométrique donnée, par rapport à la masse totale des GBR de ladite fraction granulométrique donnée. On parle également de taux de récupération.

De préférence, les GBR obtenus d'une fraction granulométrique donnée, supérieure ou égale à 1 mm, comprennent au plus 10% en masse de PdC, préférentiellement au plus 8% en masse de PdC, et encore plus préférentiellement au plus 5% en masse de PdC, par rapport à la masse totale des GBR de ladite fraction granulométrique donnée.

De préférence, les granulats de béton recyclé GBR obtenus d'une fraction granulométrique donnée, supérieure ou égale à 1 mm, comprennent de 5 à 20% en masse de GN de granulométrie inférieure à ladite fraction granulométrique donnée, et plus préférentiellement de 7 à 15% en masse de GN de granulométrie inférieure à ladite fraction granulométrique donnée, par rapport à la masse totale des GBR de ladite fraction granulométrique donnée.

En particulier, les granulats de béton recyclé GBR obtenus d'une fraction granulométrique donnée, supérieure ou égale à 1 mm, comprennent de 5 à 35% en masse de mortier résiduel, préférentiellement de 10 à 30% en masse, et encore plus préférentiellement de 15 à 25% en masse de mortier résiduel, par rapport à la masse totale des GBR de ladite fraction granulométrique donnée.

Les teneurs des GBR obtenus d'une fraction granulométrique donnée, supérieure ou égale à 1 mm, en PdC, GN de ladite fraction granulométrique donnée, GN de granulométrie inférieure à ladite fraction granulométrique donnée, et de mortier résiduel, telles que définies ci-dessus sont obtenues par dissolution sélective de la PdC présente dans lesdits GBR avec de l'acide chlorhydrique, pesée et mesure des différents constituants précités.

À l'issue de l'étape ii), et notamment des étapes ii-1) et ii-2), les fines recyclées sont séparées ou récupérées. Elles comprennent préférentiellement au moins 75% en masse de la PdC contenue dans le béton initial à recycler, là où une étape de concassage éventuellement suivie d'étape(s) de criblage de l'art antérieur conduit à des fines recyclées qui contiennent moins de 25% en masse de la PdC contenue dans le béton initial à recycler.

De préférence, les fines recyclées comprennent en outre des GN de granulométrie inférieure à 1 mm.

Dans les fines recyclées, les GN de granulométrie inférieure à 1 mm et la pâte de ciment peuvent être dissociés, associés, ou associés partiellement, et généralement associés partiellement.

Les étapes i) et ii) du procédé de l'invention sont tellement performantes qu'il reste une quantité très faible de pâte de ciment adhérant aux GN dans les GBR. Cela permet ainsi d'optimiser l'étape suivante iii) de carbonatation en favorisant notamment l'accès et la diffusion du dioxyde de carbone dans le volume poreux de la pâte de ciment de la matrice cimentaire résiduelle adhérente qui contient les phases réactives carbonatables, en particulier de la portlandite, de la chaux et des silicate de calcium hydratés (C-S-H).

De la même manière, les étapes i) et ii) du procédé de l'invention sont tellement performantes que la grande majorité de la pâte de ciment se retrouve dans les fines recyclées sous forme granulométrique très fine et bien innervée de microfractures. Les fines recyclées sont en particulier sous la forme de particules de granulométrie très fine (au moins 45% en masse par rapport à la masse totale des fines recyclées récupérées ont une granulométrie < 0,25 mm) et sont entièrement accessibles pour la carbonatation. Cela permet ainsi d'optimiser l'étape suivante iv) de carbonatation en favorisant notamment l'accès et la diffusion du dioxyde de carbone dans le volume poreux de la pâte de ciment qui contient les phases réactives carbonatables, en particulier de la portlandite, de la chaux et des silicate de calcium hydratés (C-S-H).

Enfin, grâce à la combinaison des étapes i) et ii), les granulats recyclés obtenus comprennent uniquement des granulats naturels nus et des granulats naturels associés à une matrice cimentaire résiduelle adhérente là où une étape de concassage éventuellement suivie d'étape(s) de criblage conduit à des granulats recyclés à fort taux de matrice cimentaire, certains granulats recyclés pouvant être composés uniquement de matrice cimentaire (mortier résiduel), avec peu voire pas de granulats naturels GN, au détriment de l'étape suivante de carbonatation.

Le procédé de l'invention est performant en ce qu'il permet d'obtenir pour chaque fraction granulométrique donnée, supérieure ou égale à 1 mm, des GBR ayant un taux de propreté élevé.

Dans les GBR de l'invention, le mortier (PdC + GN de granulométrie inférieure à la dite fraction granulométrique donnée) est réparti/adhère de manière hétérogène autour des GN de ladite fraction granulométrique donnée. Cela conduit alors en pratique à l'obtention de GBR propres majoritaires (i.e. granulats naturels nus ou granulats naturels propres) et de GBR non propres minoritaires (i.e. granulats naturels associés à un mortier adhérant ou granulats non propres).

En particulier, à l'issue de l'étape ii), et notamment des étapes ii-1) et ii-2), les granulats de béton recyclé GBR obtenus d'une fraction granulométrique donnée, supérieure ou égale à 1 mm, comprennent préférentiellement au moins 50% en masse de granulats naturels propres de ladite fraction granulométrique donnée (i.e. granulats naturels nus ou GBR propres de ladite fraction granulométrique donnée), plus préférentiellement de 55 à 85% en masse de granulats naturels propres de ladite fraction granulométrique donnée (i.e. granulats naturels nus ou GBR propres de ladite fraction granulométrique donnée), et encore plus préférentiellement de 60 à 75% en masse de granulats naturels propres de ladite fraction granulométrique donnée (i.e. granulats naturels nus ou GBR propres de ladite fraction granulométrique donnée), par rapport à la masse totale des GBR de ladite fraction granulométrique donnée.

Corollairement, à l'issue de l'étape ii), et notamment des étapes ii-1) et ii-2), les granulats de béton recyclé GBR obtenus d'une fraction granulométrique donnée, supérieure ou égale à 1 mm, comprennent de préférence une teneur inférieure à 50% en masse de granulats naturels non propres de ladite fraction granulométrique donnée (i.e. granulats naturels associés à du mortier résiduel adhérant ou GBR non propres de ladite fraction granulométrique donnée), plus préférentiellement de 15 à 45% en masse de granulats naturels non propres de ladite fraction granulométrique donnée (i.e. granulats naturels associés à du mortier résiduel adhérant ou GBR non propres de ladite fraction granulométrique donnée), et encore plus préférentiellement de 25 à 40% en masse de granulats naturels non propres de ladite fraction granulométrique donnée (i.e. granulats naturels associés à du mortier résiduel adhérant ou GBR non propres de ladite fraction granulométrique donnée), par rapport à la masse totale des GBR de ladite fraction granulométrique donnée.

Les teneurs des GBR obtenus d'une fraction granulométrique donnée, supérieure ou égale à 1 mm, en GBR propres et GBR non propres telles que définies ci-dessus sont obtenues par tri optique et/ou visuel pour séparer les GBR propres et les GBR non propres, puis vérification de la proportion de PdC dans les GBR propres et les GBR non propres par dissolution sélective de la PdC présente dans lesdits GBR propres et non propres avec de l'acide chlorhydrique, pesée et mesure.

Le procédé de l'invention peut comprendre plusieurs étapes de traitement micro-ondes i), plusieurs étapes de broyage ii-1) et plusieurs étapes de criblage ii-2), et de préférence plusieurs séquences successives, d'une étape de traitement micro-ondes, d'une étape de broyage ii-1) et d'une étape de criblage ii-2).

### Etape a)

Le procédé peut comprendre en outre au moins une étape a) de nettoyage des granulats recyclés GBR. Cela permet ainsi de réduire la proportion de matrice cimentaire (mortier résiduel) dans les granulats recyclés GBR, de contribuer à un taux de propreté encore supérieur des granulats recyclés GBR et d'augmenter la proportiondes fines recyclées récupérées.

L'étape a) est de préférence effectuée par abrasion, notamment à l'aide d'un crible rotatif ou d'un tamiseur giratoire.

L'abrasion est un procédé mécanique connu de nettoyage de surface.

L'étape a) est préférentiellement effectuée après l'étape de broyage ii-1).

L'étape a) peut être effectuée en même temps que (i.e. de manière concomitante avec) l'étape ii-2) de criblage, avant ou après l'étape de criblage ii-2), et de préférence en même temps que l'étape de criblage ii-2).

Dans le cas où les étapes a) et ii-2) sont concomitantes, elles peuvent être mises en œuvre à l'aide d'un crible rotatif ou d'un tamiseur giratoire.

Dans le cas où les étapes a) et ii-2) ne sont pas concomitantes, l'étape d'abrasion a) peut être mise en œuvre dans un tambour rotatif, avec ou sans releveurs.

Dans le cas où plusieurs étapes de criblage sont effectuées (e.g. étape ii-2a) et ii-2b)), le procédé peut comprendre plusieurs étapes a) de nettoyage, notamment concomitantes avec chacune des étapes de criblage, avant ou après chacune des étapes de criblage.

Afin de faciliter l'étape a), et notamment de faciliter l'abrasion de la matrice cimentaire (mortier résiduel), des granulats naturels GN peuvent être ajoutés aux granulats recyclés GBR avant l'étape a).

Les granulats naturels GN ajoutés peuvent représenter jusqu'à 99,5% en masse, de préférence jusqu'à 95% en masse, et de façon particulièrement préférée jusqu'à 50% en masse, par rapport à la masse totale des granulats (GN + GBR) mis en œuvre dans l'étape a).

### Etape b)

Le procédé peut comprendre en outre au moins une étape b) de lavage des granulats recyclés GBR. Cela permet ainsi de réduire la proportion de résidus de sable et de pâte de ciment (de fines) dans les granulats recyclés GBR (i.e. qui pourraient adhérer à la surface des GBR).

L'étape b) est de préférence effectuée par lavage avec de l'eau, et de façon particulièrement préférée par aspersion ou pulvérisation d'eau.

L'étape b) peut être effectuée en même temps que (i.e. de manière concomitante avec) l'étape a) de nettoyage ou d'abrasion, et/ou en même temps que l'étape ii-2) de criblage, et/ou entre l'étape a) de nettoyage ou d'abrasion et l'étape de criblage ii-2), et de préférence en même temps que l'étape de criblage ii-2) et éventuellement en même temps que l'étape a) de nettoyage ou d'abrasion.

Cela permet ainsi de favoriser l'entrainement des fines recyclées et leur séparation des granulats recyclés GBR.

Dans le cas où plusieurs étapes de criblage sont effectuées (e.g. étape ii-2a) et ii-2b)), le procédé peut comprendre plusieurs étapes b) de lavage, notamment concomitantes avec chacune des étapes de criblage ii-2) et/ou de nettoyage a), ou entre chacune des étapes de nettoyage a) et de criblage ii-2).

Selon un mode de réalisation préféré de l'invention, les étapes ii-2) et a) sont mises en œuvre en même temps, notamment à l'aide d'un crible rotatif ou tamiseur giratoire, et de façon particulièrement préférée en voie humide. La voie humide est de préférence mise en œuvre par aspersion ou pulvérisation d'eau (e.g. spray d'eau, qui peut réutiliser l'eau évaporée puis condensée de l'étape i). En d'autres termes, dans ce mode de réalisation en voie humide, les étapes ii-2), a) et b) sont mises en œuvre en même temps. Cela permet ainsi d'éliminer les fines recyclées qui pourraient adhérer à la surface des granulats naturels, d'éviter leur entrainement dans les granulats recyclés (GBR), et ainsi de les concentrer dans la fraction finale des fines recyclées. L'étape iv) du procédé de l'invention est optionnelle en ce qu'il est possible de ne carbonater que les GBR à l'issue de l'étape ii) selon l'étape iii) (première variante). Les fines recyclées obtenues à l'issue de l'étape ii) peuvent alors être utilisées directement dans le cru de cimenterie, par exemple pour la fabrication de clinker calcique, moyennant des ajustements de composition (e.g. pour atteindre des modules siliciques ou hydrauliques particuliers) par l'ajout d'autres sources de matériaux utilisés dans le cru. En se substituant à une fraction du calcaire naturel utilisé dans le cru de cimenterie, l'utilisation des fines recyclées en cru de cimenterie contribue à la préservation des ressources naturelles de calcaire, et réduit l'empreinte carbone du clinker en n'émettant pas de CO₂ additionnel lors de l'étape de clinkérisation, par comparaison à l'utilisation (calcination) de calcaire naturel.

L'étape iii) du procédé de l'invention est optionnelle en ce qu'il est possible de ne carbonater que les fines recyclées à l'issue de l'étape ii) selon l'étape iv) (deuxième variante). En effet, les étapes i) et ii) permettent d'obtenir des GBR tellement propres que la carbonatation iii) peut ne pas s'avérer nécessaire (teneur en PdC des GBR obtenus d'une fraction granulométrique donnée, supérieure ou égale à 1 mm faible).

Les GBR obtenues à l'issue de l'étape ii) peuvent être utilisées directement dans la préparation de nouveaux bétons. Ils comprennent une proportion de mortier résiduel si faible que leurs propriétés d'absorption d'eau et d'abrasion sont 2 à 3 fois meilleures que celles des GBR obtenus par les procédés de l'art antérieur.

Selon une troisième variante du procédé de l'invention, les fines recyclées et les GBR sont carbonatés. Cela permet ainsi de valoriser/stocker une plus grande quantité de CO₂ et d'améliorer encore les propriétés des GBR.

### Etape iii)

Le procédé peut comprendre en outre une ou plusieurs étape iii) de carbonatation en présence de dioxyde de carbone des GBR [correspondant à la fraction F₁ récupérée à l'issue de l'étape ii), ii-1), ii-2), ii-2a), ou ii-2b)].

L'étape iii) permet la carbonatation en présence de dioxyde de carbone des granulats recyclés GBR obtenus à l'étape ii) précédente, et en particulier la carbonatation en présence de dioxyde de carbone de granulats recyclés GBR ayant une ou plusieurs des granulométries décrites dans l'invention, notamment ayant une ou plusieurs granulométries allant de Gₘ à G_{M}, G₁ et/ou G₂.

Au cours de l'étape iii), la PdC qui adhère à la surface des GBR est carbonatée.

À l'issue de l'étape ii), et notamment des étapes ii-1) et ii-2), les GBR comprennent des GN associés à une faible quantité de PdC innervée dans son volume par une microporosité résultante de l'étape i). Cela permet ainsi d'optimiser l'étape iii) de carbonatation en favorisant notamment l'accès et la diffusion du dioxyde de carbone dans le volume de la pâte de ciment qui contient les phases réactives carbonatables, en particulier de la portlandite, de la chaux et des silicates de calcium hydratés (C-S-H).

L'étape iii) est de préférence effectuée en présence d'un gaz contenant du CO₂, de préférence comprenant au moins 1% en mole de CO₂, de façon particulièrement préférée au moins 10% en mole de CO₂, et de façon plus particulièrement préférée au moins 15% en mole de CO₂, par rapport au nombre de moles total de gaz.

L'étape iii) est de préférence effectuée en présence d'un gaz contenant du CO₂, de préférence comprenant au moins 5% en volume de CO₂, et de façon particulièrement préférée au moins 10% en volume de CO₂, par rapport au volume total de gaz.

Le dioxyde de carbone peut provenir de fumées contenant du CO₂, par exemple provenir d'un flux de biogaz riche en CO₂ généré par un méthaniseur ou une centrale thermique à biomasse, ou par exemple provenir d'une fumée produite par un émetteur industriel comme une cimenterie ou une centrale thermique ; ou être préparé à partir d'une source de CO₂. La source de CO₂ peut être préalablement stockée ou non.

Les fumées contenant du CO₂ contiennent de préférence au moins 15% en mole de CO₂, par rapport au nombre de moles total de gaz présent dans les fumées ou au moins 15% en volume de CO₂, par rapport au volume total de gaz présent dans les fumées.

Les fumées contenant du CO₂ peuvent contenir en outre d'autres éléments, en particulier du diazote N₂, du dioxygène O₂, et éventuellement de l'eau.

Le flux de biogaz peut contenir de 70% en mole à 90% en mole environ de CO₂, par rapport au nombre de moles total de biogaz ou 70% en volume à 90% en volume environ de CO₂, par rapport au volume total de biogaz.

Lors de l'étape iii), les granulats recyclés GBR peuvent être introduits dans un tambour rotatif ou tout autre réacteur au sein duquel ils peuvent être mis en contact avec le gaz contenant du dioxyde de carbone.

L'étape iii) peut être effectuée à une pression partielle de CO₂ allant de 0,1 à 100 bar environ, et de préférence allant de 0,1 à 5 bar environ (soit environ 250 à 12000 fois la pression partielle de 415 ppm de CO₂ de l'atmosphère terrestre).

L'étape iii) peut être effectuée à une température allant de 18°C à 100°C environ, et de préférence allant de 20 à 80°C environ.

L'étape iii) peut être effectuée avec une humidité relative allant de 0% à 100% environ, de préférence allant de 10% à 90% environ, et de préférence encore allant de 40% à 70% environ.

À l'issue de l'étape iii), les granulats recyclés carbonatés ou GBRC sont conformes à la norme NF EN 12620, notamment en termes d'absorption d'eau, et/ou de résistance à la fragmentation, et/ou de masse volumique après séchage à l'étuve, et/ou de résistance à l'abrasion, et préférentiellement au moins en termes d'absorption d'eau et de résistance à l'abrasion.

Grâce à la carbonatation des granulats recyclés GBR, on obtient des granulats recyclés carbonatés GBRC de qualité homogène et améliorée, pouvant être utilisés pour préparer un nouveau béton, notamment en vue de fabriquer une nouvelle structure. Les étapes ii-2) et iii) peuvent être concomitantes.

La carbonatation concerne les phases réactives, i.e. la pâte de ciment PdC de la matrice cimentaire résiduelle adhérente. À l'issue de l'étape iii), on obtient par conséquent des granulats recyclés carbonatés ou GBRC comprenant des granulats naturels nus, et des granulats naturels associés à une matrice cimentaire résiduelle dont la pâte de ciment est carbonatée, de préférence adhérant aux granulats naturels GN.

### Etape iv)

Le procédé peut comprendre en outre une ou plusieurs étape iv) de carbonatation en présence de dioxyde de carbone des fines recyclées [correspondant à la fraction F₂ récupérée à l'issue de l'étape ii), ii-1), ii-2), ii-2a), ou ii-2b)].

La carbonatation concerne les phases réactives, i.e. la PdC présente dans les fines recyclées. À l'issue de l'étape iv), on obtient par conséquent des fines recyclées carbonatées comprenant un mélange de GN < 1 mm et de PdC carbonatée.

La carbonatation des fines recyclées permet d'une part de pouvoir stocker du dioxyde de carbone, et d'autre part d'obtenir des fines carbonatées présentant potentiellement une activité pouzzolanique et/ou hydraulique. Elles peuvent alors être utilisées comme addition minérale dans un béton en remplacement d'un ciment (par exemple CEM I ou CEM II), ou comme constituant d'un ciment en vue de fabriquer des ciments composés. En se substituant par exemple au ciment Portland utilisé dans la formulation de bétons structuraux (constructions) ou de bétons non structuraux (parpaings, blocs, dalles, margelles, mortiers techniques), l'utilisation des fines carbonatées comme addition minérale permet de réduire l'empreinte carbone du béton. Cette réduction provient de la réduction de la proportion de ciment Portland dans le béton, et de la quantité de carbone piégée dans les fines carbonatées qui jouent alors un rôle de puits de carbone.

En d'autres termes, les fines recyclées carbonatées obtenues selon le procédé de l'invention peuvent être utilisées comme moyen de stockage du CO₂ et/ou en remplacement de tout ou partie d'un ciment. Cette utilisation des fines carbonatées comme addition minérale réactive dans la formulation du béton est un vecteur de réduction de l'empreinte carbone du béton en proportion du taux de remplacement du ciment par les fines carbonatées.

Lorsque les fines recyclées issues de l'étape ii) sont utilisées comme addition minérale, elles sont de préférence broyées avant l'étape iv) de carbonatation, par exemple jusqu'à obtenir des particules de granulométrie inférieure à 80 µm environ, de préférence allant de 5 à 20 µm environ.

L'étape iv) est de préférence effectuée en présence d'un gaz contenant du CO₂, de préférence comprenant au moins 1% en mole, de façon particulièrement préférée au moins de 5% en mole de CO₂, et de façon particulièrement préférée au moins 10% en mole de CO₂, par rapport au nombre de moles total de gaz.

L'étape iv) est de préférence effectuée en présence d'un gaz contenant du CO₂, de préférence comprenant au moins 5% en volume, et de façon particulièrement préférée au moins de 10% en volume de CO₂, par rapport au volume total de gaz.

Le dioxyde de carbone peut provenir de fumées contenant du CO₂, par exemple provenir d'un flux de biogaz riche en CO₂ généré par un méthaniseur ou une centrale thermique à biomasse, ou par exemple provenir d'une fumée produite par un émetteur industriel comme une cimenterie ou une centrale thermique ; ou être préparé à partir d'une source de CO₂. La source de CO₂ peut être préalablement stockée ou non.

Les fumées contenant du CO₂ contiennent de préférence au moins 10% en mole de CO₂, par rapport au nombre de mole total de gaz présent dans les fumées, ou au moins 10% en volume de CO₂, par rapport au volume total de gaz présent dans les fumées.

Les fumées contenant du CO₂ peuvent contenir en outre d'autres éléments, en particulier du diazote N₂, du dioxygène O₂, et éventuellement de l'eau.

Le flux de biogaz peut contenir de 70% à 90% en volume environ de CO₂, par rapport au volume total de biogaz ou de 70% à 90% en moles environ de CO₂, par rapport au nombre de moles total de biogaz.

Lors de l'étape iv), les fines recyclées peuvent être introduites dans un tambour rotatif ou tout autre réacteur au sein duquel elles peuvent être mises en contact avec le gaz contenant du dioxyde de carbone.

L'étape iv) peut être effectuée à une pression partielle de CO₂ allant de 0,1 à 100 bar environ, et de préférence allant de 0,1 à 5 bar environ (soit 240 à 12000 fois la pression partielle de CO₂ dans l'atmosphère - 0,415 millibar).

L'étape iv) peut être effectuée à une température allant de 18°C à 100°C environ, et de préférence allant de 20 à 80°C environ.

L'étape iv) peut être effectuée avec une humidité relative allant de 0% à 100% environ, et de préférence allant de 10% à 90% environ.

Grâce à la carbonatation accélérée des fines, on obtient des fines recyclées carbonatées pouvant stocker jusque environ 15% en masse de CO₂, soit environ jusqu'à 150 kg de CO₂ par tonne de fines.

### Etape i₀)

Le procédé peut comprendre en outre avant l'étape i), une étape i₀) de concassage d'un béton de construction et/ou de démolition pour former les blocs de béton de construction et/ou de démolition ayant une taille centimétrique telle que celle mise en œuvre dans l'étape i).

L'étape i₀) de concassage peut être effectuée à l'aide d'un concasseur tel qu'un gravillonneur ou concasseur à mâchoires, un concasseur à cône, un concasseur giratoire, un concasseur à percussion, un concasseur à impact, un concasseur à marteau, ou un concasseur à rotor centrifuge.

Selon une forme de réalisation préférée de l'invention, l'étape i) est directement effectuée après l'étape i₀) (pas d'étape(s) intermédiaire(s)).

Selon une forme de réalisation préférée de l'invention, le procédé ne comprend pas d'étape(s) mettant en œuvre une phase liquide entre les étapes i₀) et i).

Le procédé de l'invention permet d'obtenir à partir de blocs de béton de construction et/ou de démolition une répartition entre granulats et fines proche de la répartition initiale du béton d'origine, soit environ 70 à 90% en masse de granulats recyclés GBR ou de granulats recyclés carbonatés GBRC (fraction F₁ carbonatée ou non), et de 10 à 30% en masse de fines (fraction F₂ carbonatée ou non), par rapport à la masse totale de blocs de béton de construction et/ou de démolition, étant entendu qu'au moins une des fractions F₁ ou F₂ est carbonatée.

En particulier, l'utilisation combinée de micro-ondes, du traitement mécanique, et de la carbonatation des fines et/ou des GBR en présence de dioxyde de carbone permet le recyclage de déchets de béton issus de la construction et/ou de la déconstruction.

L'invention a pour deuxième objet une installation de recyclage mettant en œuvre un procédé de recyclage conforme au premier objet de l'invention, caractérisée en ce qu'elle comprend :
- au moins un tunnel micro-ondes pour former des blocs de béton micro-fracturés à partir de blocs de béton de construction et/ou de démolition de taille centimétrique,
- au moins un broyeur à cylindres pour fragmenter les blocs de béton micro-fracturés et libérer des granulats recyclés (GBR) comprenant des granulats naturels nus et des granulats naturels associés à une matrice cimentaire résiduelle adhérente ; et des fines recyclées,
- au moins un crible ou tamiseur vibrant, giratoire, ou rotatif pour séparer les granulats recyclés des fines recyclées, éventuellement les nettoyer et éventuellement les laver, et
- au moins un réacteur de carbonatation pour former des granulats recyclés carbonatés (GBRC), et/ou des fines recyclées carbonatées.

Le crible rotatif ou tamiseur giratoire est préféré pour permettre de séparer les granulats recyclés des fines recyclées, les nettoyer et les laver.

Les différents éléments mis en œuvre dans l'installation sont tels que définis dans le premier objet de l'invention.

L'invention a pour troisième objet un procédé de recyclage d'un béton issu de la construction et/ou de la démolition, caractérisé en ce qu'il comprend les étapes suivantes :
i) une ou plusieurs étape(s) de traitement par micro-ondes de blocs de béton de construction et/ou de démolition ayant une taille centimétrique, pour former des blocs de béton micro-fracturés, et
ii) une ou plusieurs étape(s) de traitement mécanique permettant d'extraire à partir desdits blocs de béton micro-fracturés, des granulats recyclés (GBR) comprenant des granulats naturels nus et des granulats naturels associés à une matrice cimentaire résiduelle adhérente (ou mortier résiduel) ; et des fines recyclées,
ledit procédé étant exempt des étapes iii) et iv) telles que définies dans l'invention (i.e. d'étape(s) de carbonatation des GBR et des fines recyclées obtenus à l'étape ii)).

Comme expliqué ci-avant dans le premier objet de l'invention, la combinaison des étapes i) et ii), et notamment des étapes i), ii-1) et ii-2) permet d'obtenir des granulats recyclés GBR ayant une structure au plus proche de celle des granulats naturels GN du béton initial de démolition et/ou de construction et présentant par conséquent un taux de propreté élevé.

Le procédé conforme au troisième objet de l'invention résultant des étapes i) et ii) permet ainsi d'une part d'obtenir des granulats GBR ayant un taux de propreté élevé et d'autre part d'obtenir une grande quantité de fines puisque la grande majorité des GBR a été débarrassée du mortier résiduel (et par conséquent de la pâte de ciment que le mortier contient) adhérant aux GN.

Les étapes i) et ii) du procédé conforme au troisième objet de l'invention sont tellement performantes qu'il reste une quantité très faible de pâte de ciment adhérante aux GN dans les GBR. De la même manière, les étapes i) et ii) du procédé conforme au troisième objet de l'invention sont tellement performantes que la grande majorité de la pâte de ciment se retrouve dans les fines recyclées sous forme granulométrique très fine.

L'étape ii) comprend de préférence au moins une étape ii-1) de broyage des blocs de béton micro-fracturés. Le procédé peut comprendre plusieurs étapes de broyage ii-1).

L'étape ii) peut comprendre en outre, notamment après l'étape ii-1), au moins une étape ii-2) de criblage. L'étape ii) peut comprendre une ou plusieurs étapes de criblage ii-2).

Le procédé de l'invention, et notamment l'étape ii), peut comprendre plusieurs étapes de broyage ii-1) et plusieurs étapes de criblage ii-2).

Le procédé peut comprendre en outre au moins une étape a) de nettoyage des GBR.

Le procédé peut comprendre en outre au moins une étape b) de lavage des GBR.

Le procédé peut comprendre en outre avant l'étape i), une étape i₀) de concassage d'un béton de construction et/ou de démolition pour former les blocs de béton de construction et/ou de démolition ayant une taille centimétrique telle que celle mise en œuvre dans l'étape i).

Les étapes i), ii), ii-1), ii-2), a), b), et i₀) du procédé conforme au troisième objet de l'invention sont telles que définies dans le premier objet de l'invention.

Ledit procédé conforme au troisième objet de l'invention permet par conséquent d'isoler les GBR directement obtenus à l'étape ii). En d'autres termes, il correspond à un procédé de fabrication de GBR.

Les fines recyclées obtenues à l'issue de l'étape ii) du procédé conforme au troisième objet peuvent être utilisées directement dans le cru de cimenterie, par exemple pour la fabrication de clinker calcique, moyennant des ajustements de composition (e.g. pour atteindre des modules siliciques ou hydrauliques particuliers) par l'ajout d'autres sources de matériaux utilisés dans le cru. En se substituant à une fraction du calcaire naturel utilisé dans le cru de cimenterie, l'utilisation des fines recyclées en cru de cimenterie contribue à la préservation des ressources naturelles de calcaire, et réduit l'empreinte carbone du clinker en n'émettant pas de CO₂ additionnel lors de l'étape de clinkérisation, par comparaison à l'utilisation (calcination) de calcaire naturel.

Les GBR obtenues à l'issue de l'étape ii) du procédé conforme au troisième objet peuvent être utilisées directement dans la préparation d'un nouveau béton.

L'invention a pour quatrième objet des granulats recyclés (GBR) obtenus selon un procédé conforme au premier objet de l'invention ou obtenu selon un procédé conforme au troisième objet de l'invention, caractérisés en ce que les GBR d'une fraction granulométrique donnée, supérieure ou égale à 1 mm, comprennent au moins 50% en masse de granulats naturels propres de ladite fraction granulométrique donnée (i.e. granulats naturels nus ou GBR propres de ladite fraction granulométrique donnée), plus préférentiellement de 55 à 85% en masse de granulats naturels propres de ladite fraction granulométrique donnée (i.e. granulats naturels nus ou GBR propres de ladite fraction granulométrique donnée), et encore plus préférentiellement de 60 à 75% en masse de granulats naturels propres de ladite fraction granulométrique donnée (i.e. granulats naturels nus ou GBR propres de ladite fraction granulométrique donnée), par rapport à la masse totale des GBR de ladite fraction granulométrique donnée.

Corollairement, les granulats de béton recyclé GBR, supérieure ou égale à 1 mm, comprennent de préférence une teneur inférieure à 50% en masse de granulats naturels non propres de ladite fraction granulométrique donnée (i.e. granulats naturels associés à du mortier résiduel adhérant ou GBR non propres de ladite fraction granulométrique donnée), plus préférentiellement de 15 à 45% en masse de granulats naturels non propres de ladite fraction granulométrique donnée (i.e. granulats naturels associés à du mortier résiduel adhérant ou GBR non propres de ladite fraction granulométrique donnée), et encore plus préférentiellement de 25 à 40% en masse de granulats naturels non propres de ladite fraction granulométrique donnée (i.e. granulats naturels associés à du mortier résiduel adhérant ou GBR non propres de ladite fraction granulométrique donnée), par rapport à la masse totale des GBR de ladite fraction granulométrique donnée.

En particulier, les GBR d'une fraction granulométrique donnée, supérieure ou égale à 1 mm, comprennent au plus 10% en masse de PdC, préférentiellement au plus 8% en masse de PdC, et encore plus préférentiellement au plus 5% en masse de PdC, par rapport à la masse totale des GBR de ladite fraction granulométrique donnée.

Les granulats de béton recyclé GBR d'une fraction granulométrique donnée, supérieure ou égale à 1 mm, comprennent préférentiellement de 65 à 95% en masse de GN de ladite fraction granulométrique donnée, plus préférentiellement de 70 à 90% en masse de GN de ladite fraction granulométrique donnée, et encore plus préférentiellement de 75 à 85% en masse de GN de ladite fraction granulométrique donnée, par rapport à la masse totale des GBR de ladite fraction granulométrique donnée.

De préférence, les granulats de béton recyclé GBR d'une fraction granulométrique donnée, supérieure ou égale à 1 mm, comprennent de 5 à 20% en masse de GN de granulométrie inférieure à ladite fraction granulométrique donnée, et plus préférentiellement de 7 à 15% en masse de GN de granulométrie inférieure à ladite fraction granulométrique donnée, par rapport à la masse totale des GBR de ladite fraction granulométrique donnée.

En particulier, les granulats de béton recyclé GBR d'une fraction granulométrique donnée, supérieure ou égale à 1 mm, comprennent de 5 à 35% en masse de mortier résiduel, préférentiellement de 10 à 30% en masse, et encore plus préférentiellement de 15 à 25% en masse de mortier résiduel, par rapport à la masse totale des GBR de ladite fraction granulométrique donnée.

### Brève description des dessins

Les dessins annexés illustrent l'invention :
La figure 1 représente la fracturation du béton selon un procédé de l'art antérieur, et comparativement selon le procédé de l'invention.
La figure 2 représente un diagramme schématique des différentes étapes du procédé de l'invention.
La figure 3 représente la mesure de la propreté des GBR au travers de la variation du taux de PdC résiduelle (% en masse) en fonction de la taille des GBR ; et la mesure de l'absorption d'eau des GBR (en %) en fonction de la taille des GBR, selon le procédé de l'invention, et comparativement selon un procédé de référence.
La figure 4 représente l'analyse de spéciation des constituants du béton initial et des GBR à l'issue du procédé de l'invention, et comparativement d'un procédé d'un procédé de référence.
La figure 5 permet de visualiser la performance du procédé de l'invention par rapport à un procédé de référence, et par rapport à la limite théorique.
La figure 6 permet de visualiser la performance du procédé de l'invention par rapport à un procédé de référence, et par rapport à la limite théorique.

D'autres caractéristiques et avantages de la présente invention apparaîtront à la lumière de la description d'exemples non limitatifs du procédé selon l'invention.

### Exemples

### Exemple 1 : représentations du procédé conforme à l'invention et d'un procédé de l'art antérieur non conforme à l'invention

La figure 1 comprend une représentation de la fracturation d'un béton selon un procédé de l'art antérieur (figure 1a)) et une représentation de la fracturation d'un béton selon le procédé de l'invention (figure 1b)).

Dans la figure 1a), la fracturation est aléatoire et non sélective entre les GN et le mortier. Elle produit des GBR à faible taux de GN (< 60% en masse de GN par rapport à la masse totale des GBR) et à taux élevé de PdC (> 10% en masse de PdC par rapport à la masse totale des GBR), avec un potentiel élevé de fracturation transgranulaire des granulats naturels GN d'origine. Il y a donc la formation possible de granulats uniquement constitués de matrice cimentaire, et la faible libération de granulats naturels GN ayant leur structure initiale conservée. À l'issue de la fracturation, on obtient majoritairement un type de granulats de béton recyclé (GBR) : des granulats mixtes composés de morceaux de granulats naturels et de matrice cimentaire ou mortier en grande proportion au sein des granulats mixtes. Corollairement, la fracturation produit peu de fines recyclées dans lesquelles ne se concentre pas plus que 25% de la PdC du béton initial à recycler.

Dans la figure 1b), la fracturation d'un béton selon le procédé de l'invention est sélective entre les GN et le mortier, évitant ainsi une fracturation des granulats naturels GN d'origine, et favorisant la libération d'une part de granulats naturels GN ayant leur structure initiale conservée, et d'autre part de la matrice cimentaire. La pâte de ciment dans la matrice cimentaire microfracturée peut conduire à des fines qui sont ensuite carbonatées ou pas, de granulométrie aisément séparable de celle des granulats. À la surface des granulats naturels libérés, une matrice cimentaire résiduelle adhérente en faible proportion peut être présente et ensuite carbonatée ou pas pour obtenir des granulats recyclés GBR ou recyclés carbonatés GBRC aussi performants que les granulats naturels d'origine. En d'autres termes, la fracturation d'un béton selon le procédé de l'invention favorise à la fois la concentration des GN dans des GBR à faible taux de mortier adhérent sans altérer les propriétés granulométriques et mécaniques des GN, et la récupération de la PdC contenue dans le béton initial à recycler dans une fraction de fines. La microfracturation de la PdC permet de concentrer la majorité de la PdC du béton initial à recycler dans les fines, et favorise la carbonatation de la PdC des fines et/ou de celle qui adhère en faible quantité à la surface des GBR. La carbonation des GBR permet d'obtenir des GBRC dont les performances d'usage sont aussi bonnes que celles des GN.

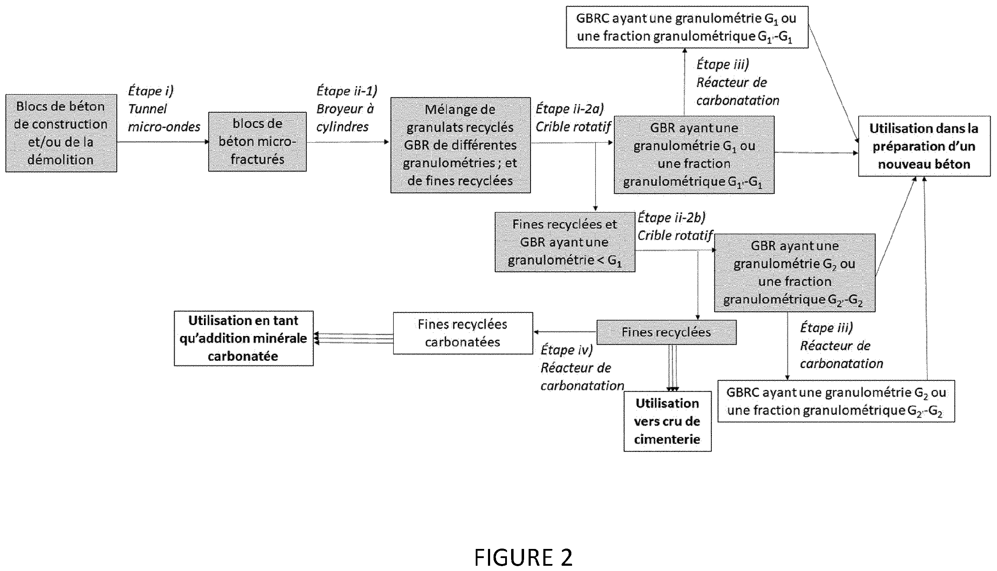

La figure 2 montre l'étape i) de traitement micro-ondes au sein d'un tunnel micro-ondes de blocs de béton de construction et/ou de la démolition pour former des blocs de béton micro-fracturés. Ceux-ci sont ensuite broyés selon une étape ii-1) dans un broyeur à cylindres pour former un mélange de granulats recyclés GBR de différentes granulométries ; et de fines recyclées. Le broyage ii-1) permet d'obtenir une granulométrie par exemple inférieure ou égale à 8 mm. Une première étape de criblage ou tamisage ii-2a) est alors effectuée à l'aide d'un crible rotatif pour extraire des granulats recyclés ayant une fraction granulométrique G_{1'}-G₁ d'une part (e.g. fraction granulométrique de 4 à 8 mm) ; et un mélange de fines recyclées et de granulats recyclés ayant une granulométrie < G₁ d'autre part (granulométrie inférieure à 4 mm).

Les granulats recyclés GBR propres ayant une fraction granulométrique G_{1'}-G₁ sont alors carbonatés selon une étape iii) dans un réacteur de carbonatation pour former une première fraction de GRBC. Les fines recyclées et les granulats recyclés ayant une granulométrie < G₁ subissent une nouvelle étape de criblage ou tamisage ii-2b) à l'aide d'un crible rotatif pour extraire des granulats recyclés GBR ayant une fraction granulométrique G_{2'}-G₂ d'une part (e.g. granulométrie ou fraction granulométrique de 1 à 4 mm) ; et des fines recyclées d'autre part (granulométrie inférieure à 1 mm).

Les granulats recyclés propres ayant une fraction granulométrique G_{2'}-G₂ sont alors carbonatés selon une étape iii) dans un réacteur de carbonatation pour former une deuxième fraction de GBRC et/ou les fines recyclées sont carbonatées dans un réacteur de carbonatation selon un étape iv).

De manière optionnelle, les blocs de béton mis en œuvre dans l'étape i) et ayant une taille centimétrique (e.g. ≤ 30 mm) peuvent être obtenus à partir du concassage d'un béton de construction et/ou de démolition, de préférence à l'aide d'un gravillonneur ou concasseur à mâchoires [étape i₀)].

Lors des étapes ii-2a) et ii-2b), des étapes d'abrasion a) et de lavage b) (aspersion d'eau) sont de préférence effectuées de manière concomitantes avec chacune des étapes ii-2a) et ii-2b).

### Exemple 2 : recyclage d'un béton issu de la construction et/ou de la démolition selon un procédé conforme à l'invention

### 2.1 Fabrication des échantillons de béton et caractéristiques

Un béton a été formulé à partir de ciment et de granulats naturels (GN) siliceux concassés de granulométrie inférieure à 8 mm, avec un ratio eau/ciment = 0,6.

2.1.1 Le ciment utilisé est un ciment de type CEM I de chez Lafarge, de l'usine du Teil. Sa classe de résistance est 52,5R, c'est-à-dire à prise rapide. Il répond aux exigences européennes de la norme EN 197-1.

Les caractéristiques physiques et mécaniques du ciment utilisé sont les suivantes :
- Surface spécifique Blaine = 4160 cm²/g, et
- Masse volumique = 3,15 g/cm³.

2.1.2 Les granulats naturels utilisés (GN) sont un mélange de sable (S) et de graviers (G) de la sablière Palvadeau (St Christophe du Ligneron) de type concassé siliceux. Les caractéristiques de ces granulats sont les suivantes :
- Masse volumique = 2640 kg/m³,
- Coefficient d'absorption = 0,7%,
- Chlorures < 0,001%,
- Sulfates solubles dans l'eau <0,01%, et
- Teneur en alcalins actifs = 0,0022%.

Le tableau 1 ci-dessous représente la distribution granulométrique des GN utilisés pour formuler le béton, et plus particulièrement le % en poids (fractions massiques) de 5 différentes fractions granulométriques, à savoir 4/8 mm, 2/4 mm, 1/2 mm, 0,25/1 mm et 0/0,25 mm, par rapport au poids total des granulats naturels GN utilisés pour formuler le béton.

**TABLEAU 1**

| **Fraction granulométrique de GN** | **Nomenclature** | **Fraction massique (% en poids)** |
|---|---|---|
| 4/8 mm | GN 4/8 | 51,2 |
| 2/4 mm | GN 2/4 | 12,9 |
| 1/2 mm | GN 1/2 | 7,4 |
| 0,25/1 mm | GN 0,25/1 | 14,2 |
| 0/0,25 mm | GN 0/0,25 | 14,3 |
| Total | | 100,0 |
| 0/1 mm | GN<1 | 28,5 |

Ces fractions massiques s'interprètent comme les valeurs moyennes de la composition réelle en GN du béton utilisé ci-après. La dernière ligne de ce tableau 1 définit la fraction granulométrique de GN 0/1 mm à laquelle il sera fait référence ci-après. Cette fraction agrège les fractions 0,25/1 mm et 0/0,25mm de GN.

### 2.1.3 Formulation du béton

Les proportions de liant (ciment et superplastifiant), d'eau et de GN mises en œuvre pour produire le béton sont indiquées dans le tableau 2 ci-dessous :

**TABLEAU 2**

| **Dosage CEM I** | 280 kg/m³ de béton | **Constituants du béton** | **Fraction massique (%)** |
|---|---|---|---|
| **Ratio massique Eau/Ciment** | 0,6 | CEM I | 11,8 |
| **Ratio massique Graviers/Sable** | 1,33 | Eau | 7,6 |
| **Superplastifiant** | 0,3% en poids, par rapport au poids total de eau + ciment + GN + superplastifiant | GN | 80,6 |

Plusieurs échantillons de béton sont préparés par malaxage des constituants dans un malaxeur à mortier pendant 60 secondes à petite vitesse (62 tr/min), 40 secondes à grande vitesse (125 tr/min), 90 secondes de pause puis 60 secondes à grande vitesse (125 tr/min) pour former un mélange ; puis coulage du mélange dans des moules cylindriques en polypropylène gris de diamètre 25 mm et de hauteur 30 mm. Les moules sont vibrés 2×10 secondes sur table vibrante. Cela conduit à la formation de plusieurs cylindres de béton de composition et de forme contrôlée de taille 30 mm environ dans leur plus grande dimension.

Ces cylindres de béton sont ensuite stockés sous cellophane dans une pièce tempérée à 19°C pendant 28 jours pour la cure du béton.

Après leur cure de 28 jours en pièce tempérée, les échantillons de béton cylindriques sont séchés en étuve à 80°C pendant 48h. Cette durée a été déterminée suite à un essai sur un lot de granulats pesés à intervalles réguliers jusqu'à atteindre une masse constante (Δm<0,1%). Ce séchage assure une reproductibilité des échantillons de béton produits, en leur conférant un taux d'humidité contrôlé et comparable à celui d'un béton vieilli naturellement.

La composition du béton dans les échantillons, après cure et stockage, est mesurée par dissolution de la PdC dans de l'acide chlorhydrique à 19% en masse. Les valeurs reprises dans le tableau 3 ci-dessous donnent l'étendue des valeurs de composition mesurée sur plusieurs échantillons de 30 mm de béton, chaque échantillon étant dissous individuellement. Cela permet de juger de la variabilité de composition des échantillons de béton utilisés.

**TABLEAU 3**

| **Constituants du béton** | **Fraction massique (%)** | **Fraction massique moyenne (%)** |
|---|---|---|
| GN 4/8 | 41,7 - 50,9 | 44,9 |
| GN 2/4 | 8,7 - 14,5 | 11,7 |
| GN 1/2 | 5,1 - 6,6 | 6,0 |
| GN 0,25/1 | 9,4 - 12,1 | 10,4 |
| GN 0/0,25 | 8,8 - 13,1 | 11,0 |
| PdC (ciment durci + eau) | 14,1 - 17,1 | 16,1 |
| Total | | 100 |
| Mortier (PdC + GN<1) | 32,3 - 42,3 | 37,5 |

### 2.2 Mise en œuvre du procédé de l'invention

### 2.2.1 Etape i) de fracturation micro-onde

Le banc micro-ondes utilisé est un guide d'ondes à cavité monomode fabriqué par SAIREM dont les caractéristiques sont les suivantes :
- fréquence = 2450 ± 25 MHz,
- Puissance de sortie = 2000 ± <0,1% W,
- Puissance d'usage maximum = 1700 W,
- Guide d'onde = WR340 (section rectangulaire 86×43mm),
- Ondulation des ondes < 0,3% RMS, et
- Système de refroidissement du magnétron : eau.

Ce banc micro-ondes permet de traiter un échantillon de béton de 30 mm à la fois, à une puissance et durant un temps donnés. Un échantillon cylindrique de béton est déposé dans un tube de quartz servant de porte échantillon, le tube étant placé dans la cheminée du banc micro-ondes. Chaque échantillon est traité pendant 4 minutes à une puissance micro-ondes incidente de 1,5 kW. Les températures atteintes en surface du béton vont de 450°C à plus de 600°C (limite mesurable par le thermomètre infrarouge utilisé).

### 2.2.2 Etape ii) de traitement mécanique

### 2.2.2.1 Concassage non percussif (etape i-1))

Le concassage non percussif qui suit le traitement micro-ondes est réalisé au moyen d'une presse hydraulique manuelle (Atlas 15T de marque Specac). Les échantillons de béton sont comprimés individuellement. La course de la presse hydraulique s'arrête à 8 mm de la surface sur laquelle sont posés les GBR, ce qui correspond à la taille maximum des GN des échantillons de béton.

### 2.2.2 Criblage (étape ii-2))

L'échantillon concassé est ensuite criblé en voie sèche sur des tamis standards à mailles carrées 8 mm, 4 mm, 2 mm, 1 mm et 0,25 mm pour produire les fractions granulométriques 4/8 mm, 2/4 mm, 1/2 mm, 0,250/1 mm et 0/0,25 mm.

### 2.2.2.3 Abrasion (étape a))

Les fractions de granulats de béton recyclé (GBR) 1/4 mm et 4/8 mm produites par concassage puis criblage sont abrasées pendant un temps court de 2 minutes séparément dans une jarre métallique cylindrique de diamètre interne 10 cm, tournant à une vitesse de 100 tours/min. La charge abrasive se compose de 336 g de billes d'alumine de 20 mm de diamètre et 200 ml d'eau. Les produits sont ensuite recriblés à 8 mm et 4 mm afin de séparer les GBR de 8 mm et 4 mm respectivement des fines d'abrasion.

A l'issue des étapes ii-1), ii-2) et a), plusieurs fractions de fines sont récupérées et rassemblées.

### 2.2.3 Carbonatation des fines (étape iii))

Les fines obtenues sont broyées à 80 µm avec un mortier-pilon automatique, avec une taille moyenne d₅₀ = 10 µm environ, cette finesse se justifiant pour l'utilisation de fines carbonatées comme addition minérale. L'étape de carbonatation des fines broyées est réalisée en suspension dans un réacteur agité de volume utile 300 ml. La suspension utilisée consiste en un mélange de 15 g de fines de béton recyclé et de 150 ml d'eau distillée. Le mélange est assuré par un mobile d'agitation tournant à 800 tour/min. Le réacteur de carbonatation opère sous une pression partielle de CO₂ de 5 bar à une température contrôlée de 60°C. Un essai de carbonatation dure 20 heures, durant lesquelles la consommation du CO₂ par les fines est mesurée en continu. Le taux de carbonatation final des fines carbonatées est obtenu par analyse thermogravimétrique (ATG) ou par mesure du carbone total (analyse CHNS).

### Exemple 3 comparatif : recyclage d'un béton issu de la construction et/ou de la démolition selon un procédé non conforme à l'invention

Le procédé de l'invention a été comparé à un procédé de concassage non percussif, qui représente la technologie actuelle de production de granulats de béton recyclé la plus performante. Ce procédé comparatif, intitulé par la suite 'procédé de référence', a été mis en œuvre avec les mêmes échantillons de béton que ceux décrits au point 2.1. La mise en œuvre du procédé de référence consiste en un traitement mécanique *via* des étapes de concassage non percussif et de criblage dans les mêmes conditions que celles décrites au point 2.2.

Une étape de carbonatation des fines est effectuée comme décrit dans l'exemple 2, partie 2.2.3.

### Exemple 4 : performances du procédé de l'invention

### 4.1 Critères d'évaluation de performance

Les critères de performance utilisés pour caractériser la performance du procédé portent sur la qualité et les propriétés d'usage des granulats de béton recyclé (GBR) et des fines de béton recyclé.

### Pour les granulats de béton_recyclé (GBR):

- Qualité :
   ❖ Taux (% massique) de PdC dans une fraction granulométrique de GBR donnée,
   ❖ Taux de GBR propres (i.e. GBR présentant un taux de PdC < 5% en masse) dans une fraction granulométrique de GBR donnée, et
   ❖ Taux (% massique) de granulats naturels (GN) de même fraction granulométrique que les GBR.
- Propriétés d'usage :
   ❖ Absorption d'eau des GBR par la méthode WA24. Cet essai mesure la teneur en eau des GBR après séchage selon la norme NF EN 1097-5. Elle s'exprime en pourcentage massique.
   ❖ Résistance à l'usure des GBR mesurée par l'essai Micro Deval (MDE). Cet essai mesure la résistance à l'usure par frottement entre les GBR et une charge abrasive de billes d'acier selon la norme NF EN 1097-1. Le résultat de l'essai s'exprime en % et représente le pourcentage massique de particules de taille < 1,6 mm produites pendant l'essai.

### Pour les Fines de béton recyclé (< 1_mm):

- Qualité :
   ❖ Taux (% massique) de mortier que le procédé concentre dans les fines (< 1 mm) produites
   ❖ Taux (% massique) de PdC que le procédé concentre dans les fines (< 1 mm) produites
   ❖ Taux (% massique de CO₂ capté) de carbonatation des fines.

### 4.2 Propreté des granulats de béton recyclé

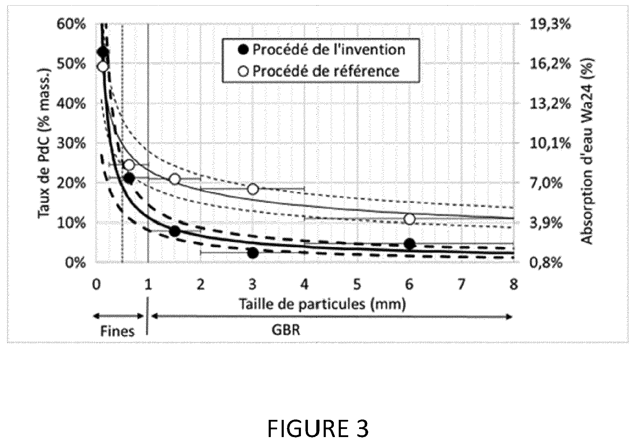

La figure 3 annexée montre la mesure de propreté des GBR au travers de la variation du taux de PdC résiduelle (% en masse) (à gauche) en fonction de la taille des GBR pour le procédé de l'invention (ronds pleins) et pour le procédé de référence (ronds vides). Ce taux est mesuré par dissolution des GBR de fractions granulométriques 4/8 mm, 2/4 mm, 1/2 mm, 0,250/1 mm et 0/0,25 mm par une solution d'acide chlorhydrique 19% en masse.

L'absence de chevauchement des intervalles de confiance à 95% du taux massique de PdC résiduelle jusqu'à une granulométrie de GBR de 0,5 mm démontre que le procédé de l'invention permet de produire des GBR significativement plus propres que les GBR produits par le procédé de référence jusqu'à des GBR de taille 0,5 mm.

La figure 3 annexée montre également la mesure de l'absorption d'eau des GBR (en %) (à droite) en fonction de la taille des GBR pour le procédé de l'invention (courbes pointillées longs) et pour le procédé de référence (courbes pointillées courts). Ce taux est mesuré par dissolution des GBR de fractions granulométriques 4/8 mm, 2/4 mm, 1/2 mm, 0,250/1 mm et 0/0,25 mm par une solution d'acide chlorhydrique 19% en masse.

### 4.3 Spéciation des produits au cours du procédé de l'invention

L'analyse fine de la qualité des produits au cours du procédé de l'invention (vs procédé de référence) consiste en la mesure de la spéciation des constituants initiaux du béton (GN et PdC, voir exemple 2, partie 2.1) avant et après le procédé de l'invention (vs procédé de référence) (exemple 2, partie 2.2 et exemple 3). Par spéciation, on entend la traçabilité des constituants initiaux dans les produits du procédé de l'invention (vs procédé de référence).

Pour rappel, les produits utilisés pour caractériser la performance des procédés de recyclage du béton sont les GBR 4/8, GBR 2/4, GBR 1/2 et les fines (particules < 1 mm). Les constituants d'intérêt dans la mesure de spéciation sont les granulats naturels GN 4/8, GN 2/4, GN 1/2, et les fines représentées par GN 0,25/1, GN 0/0,25 et la PdC.

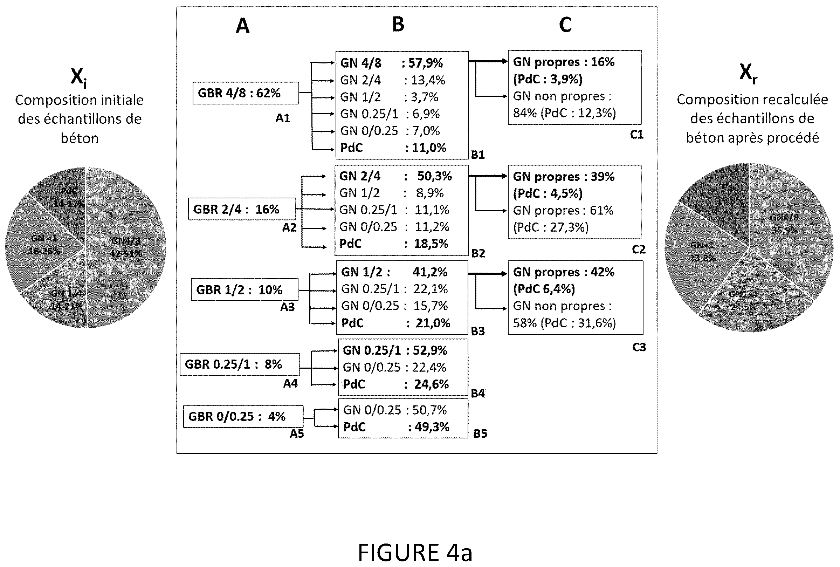

Les figures 4a) et 4b) montrent cette spéciation de manière détaillée respectivement pour le procédé de référence et pour le procédé de l'invention. Dans ces figures :
- Xi et X'i représentent la composition initiale des échantillons de béton, avant mise en œuvre des procédés. Cette composition est la même pour le procédé de référence et pour le procédé de l'invention.
- Les colonnes A et A' donnent la répartition massique des produits (GBR 4/8, GBR 2/4, GBR 1/2 et les fines) après la mise en œuvre respectivement du procédé de référence et du procédé selon l'invention. Les produits sont séparés par criblage après le concassage pour le procédé de référence (exemple 3), et après les étapes ii) et a) pour le procédé de l'invention (exemple 2, partie 2.2) ; et leurs fractions massiques sont obtenues par pesée.
- Les colonnes B et B' donnent la spéciation (sous la forme de pourcentage massique) de chacun des produits, autrement dit, de chacune des fractions des colonnes A et A' : B1 (respectivement B'1) correspond à la spéciation des GBR 4/8 de A1 (respectivement A'1), B2 (respectivement B'2) correspond à la spéciation des GBR 2/4 de A2 (respectivement A'2) etc.... La mesure de spéciation consiste en la dissolution sélective de la PdC dans chacun des produits dans l'acide chlorhydrique à 23% massique, suivie du criblage (et éventuellement de l'abrasion), pesée et séchage des fractions granulométriques de GN présentes après dissolution. La perte de masse après dissolution donne une mesure directe de la masse de PdC présente dans les produits.
- Les colonnes C et C' donnent la quantité observée de GN propres (ou nus ou GBR propres) et de GN associés à un mortier résiduel adhérent (ou non propres ou GBR non propres), ainsi que la quantité de PdC dans la fraction sélectionnée : C1 (respectivement C'1) correspond aux observations et mesures pour la fraction GN 4/8 de B1 (respectivement B'1), C2 (respectivement C'2) pour la fraction GN 2/4 de B2 (respectivement B'2) et C3 (respectivement C'3) pour la fraction GN 1/2 de B3 (respectivement B'3).
- Xr et X'r représentent la composition recalculée des échantillons de béton, après mise en œuvre respectivement du procédé de référence et du procédé selon l'invention. Elle est établie sur la base des valeurs des colonnes B et B' qui donnent la spéciation des constituants initiaux du béton dans les produits.

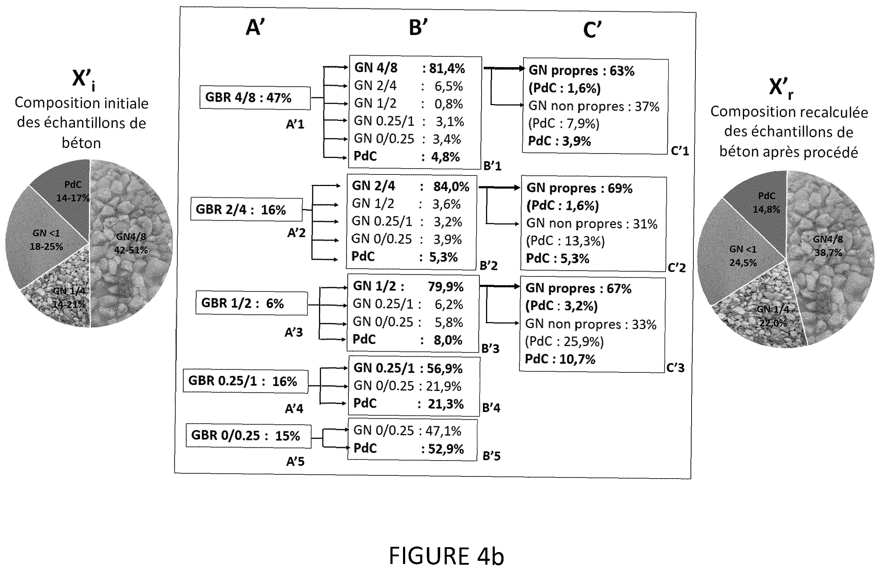

La fraction des fines étant définie comme toutes les particules de taille inférieure à 1 mm (GBR 0,25/1 + GBR 0/0,25), l'analyse de spéciation des constituants montre que le procédé de l'invention concentre 31% de la masse du béton dans cette fraction de fines (colonne A 'de la figure 4b) : 16% de A'4 + 15% de A'5), contre seulement 12% pour le procédé de référence (colonne A de la figure 4a) : 8% A4 + 4% A5). Le procédé de l'invention permet donc de concentrer près de 3 fois plus de fines que le procédé de référence, fines qui pourront être valorisées comme cru de cimenterie si elles ne sont pas carbonatées, ou bien comme addition minérale si elles le sont.

Le taux massique des GBR 4/8, 2/4 et 1/2 du procédé de l'invention est très proche du taux massique des GN 4/8, 2/4, 1/2 du béton initial, ce qui s'explique par un taux massique de récupération des GN de plus de 75%, voire 80%, dans les GBR. En d'autres termes, les GBR produits par le procédé de l'invention contiennent moins de 20% en masse de mortier résiduel, soit encore un taux massique de PdC entre 5% et 8% (cf B'1, B'2 et B'3 de la figure 4b).

Par comparaison, les GBR du procédé de référence ont un taux massique de récupération des GN entre 40 et 60%, donc un taux de mortier résiduel massique de 60 à 40%, dans les GBR, soit encore un taux de PdC entre 11% et 21% (cf B1, B2 et B3 de la figure 4a).

Le recalcul des compositions Xr et X'r des échantillons de béton indique que le procédé de l'invention préserve mieux l'intégrité de taille des GN initiaux que le procédé de référence. En effet, on observe un taux de GN 4/8 dans la composition recalculée X'r du procédé de référence significativement inférieur à celui obtenu pour le procédé de l'invention, ce qui induit de facto une augmentation plus importante du taux de GN 2/4 avec le procédé de référence. Cela s'explique grâce à la microfracturation de la PdC induite par l'étape micro-ondes qui évite de trop fragmenter les GN lors de l'étape suivante de concassage.

Une mesure du degré de libération (ou degré de propreté) des GN dans les GBR a été réalisée par tri visuel, avec vérification du taux de PdC des fractions séparées (colonnes C et C'). Cette mesure démontre la sélectivité du procédé de l'invention vis-à-vis de la récupération des GN, cette sélectivité étant apportée par la microfracturation du béton induite par l'étape de traitement micro-ondes. Cette sélectivité se traduit par l'hétérogénéité de répartition de la PdC résiduelle, cette dernière se concentrant sur une fraction faible des GN, tandis que la majorité des GBR présente un taux de PdC particulièrement bas. Ces derniers sont ici qualifiés de GN propres (ou nus). La très forte proportion de GN propres dans les GBR est une spécificité du procédé de l'invention. La mesure de libération par tri visuel a été réalisée sur les fractions de GBR 4/8 mm (B1 et B'1), 2/4 mm (B2 et B'2) et 1/2 mm (B3 et B'3). Sur la partie droite de la figure 4b, illustrée par la colonne C', on remarque que plus de 60-70% des GBR produits par le procédé de l'invention sont propres (il s'agit de GBR qui contiennent entre 1,6% et 3,2% de PdC), les 30-40% restants concentrant la PdC avec une teneur en PdC entre 3,9% et 10,7%. Illustré par la colonne C sur la figure 4a), le degré de libération (ou degré de propreté) des GBR du procédé de référence va de 16% à 42% seulement. En résumé, pour les 3 classes granulométriques de GBR analysées, le degré de libération (ou degré de propreté) des GN est 2 fois plus élevé pour le procédé de l'invention que pour le procédé de référence.

Les performances du procédé de l'invention ont été comparées à celles du procédé de référence et celles de la limite théorique. A titre d'exemples, la limite théorique de propreté d'un GBR en termes de taux de PdC résiduelle est 0%, tandis que le % maximum de GN 4/8mm dans les GBR 4/8 mm est 100%. Tous les pourcentages sont donnés en % massique.

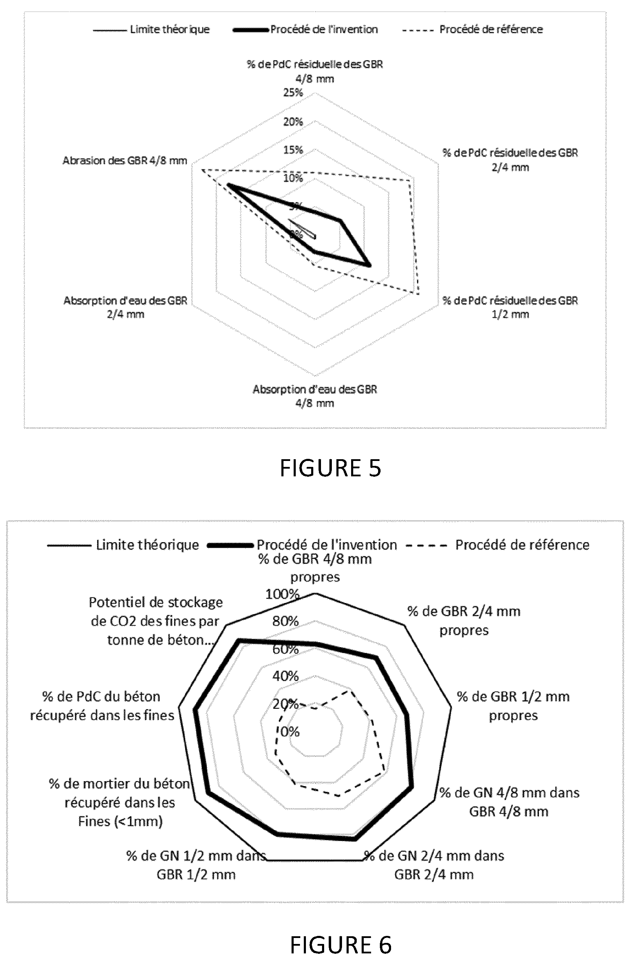

La figure 5 permet de visualiser la performance du procédé de l'invention par rapport au procédé de référence, et par rapport à la limite théorique.

### 4.4 Caractérisation de la carbonatation

Les procédés de carbonatation en voie aqueuse, dans le meilleur des cas, permettent d'atteindre 80% environ de la limite théorique de carbonatation de solides, calculable sur la base de leur composition chimique.

La limite théorique de carbonatation des fines est directement liée à la quantité de calcium (Ca) qu'elles contiennent. Par unité de masse de fines, cette limite théorique est similaire pour les fines du procédé de l'invention et du procédé de référence, dans la mesure où les mesures démontrent qu'elles ont la même composition chimique. Cette limite théorique vaut entre 170 et 200 kg de CO₂ / tonne de fines. Par contre, le procédé de l'invention permet de produire 2,6 fois plus de fines que le procédé de référence, si bien que le procédé de l'invention pourra au maximum stocker 2,6 fois plus de CO₂ par tonne de béton recyclé que le procédé de référence. Cela représente un potentiel de stockage de CO₂ du procédé de l'invention de 60 kg de CO₂ / tonne de béton recyclé contre 20 kg de CO₂ / tonne de béton recyclé pour le procédé de référence, sachant que l'on estime sur les mêmes bases le potentiel maximum de carbonatation du béton à 70 kg de CO₂ / tonne de béton recyclé. Ainsi, dans les fines, rapporté à une tonne de béton recyclé, le procédé de l'invention permet de stocker au maximum 3 fois plus de CO₂ que le procédé de référence (tableau 4 ci-dessous).

**TABLEAU 4**

| | **Fines du procédé de référence** | **Fines du procédé de l'invention** |
|---|---|---|
| **% PdC** | 33% | 37% |
| **% GN** | 67% | 63% |
| **Limite théorique de carbonatation (kg CO₂ / tonne de fines)** | 170 | 200 |
| **Limite théorique de carbonatation des fines, rapportée à une tonne de béton (kg CO₂** / **tonne de béton)** | 20 | 60 |

Le taux de carbonatation final des fines carbonatées est obtenu par mesure du carbone total (analyse CHNS).

Le tableau 5 ci-dessous répertorie les résultats pour les fines obtenues selon le procédé de référence et selon le procédé de l'invention.

**TABLEAU 5**

| | **%C (Mesure CHNS)** | **kg de CO₂** / **tonne de fines** | **Taux de carbonatation** |
|---|---|---|---|
| **Procédé de référence** | 2,69 | 116 | 68% |
| **Procédé de l'invention** | 3,10 | 150 | 78% |

La mesure expérimentale confirme que le potentiel de carbonatation des fines est proche pour le procédé de l'invention et le procédé de référence, ce qui résulte de leurs compositions chimiques proches. Les résultats sont cependant sensiblement à l'avantage des fines produites par le procédé de l'invention, avec un gain de carbonatation de +1,3 par rapport au fines produites par le procédé de référence. Ce résultat, auquel s'ajoute l'observation lors des essais de carbonatation des fines que les fines du procédé selon l'invention se carbonatent avec une meilleure cinétique que celles du procédé de référence, résulte vraisemblablement de la microfracturation de la PdC induite par l'étape de traitement micro-ondes, qui facilite le transfert du dioxide de carbone (CO₂) vers les éléments carbonatables (Calcium) présents dans la PdC.

La figure 6 permet de visualiser la performance du procédé de l'invention par rapport au procédé de référence, et par rapport à la limite théorique.

Sur l'ensemble des critères de performance mesurés, le procédé de l'invention est en moyenne 2,3 fois plus performant que le procédé de référence.

## Revendications

1. Procédé de recyclage d'un béton issu de la construction et/ou de la démolition, **caractérisé en ce qu'**il comprend au moins les étapes suivantes :
i) une ou plusieurs étape(s) de traitement par micro-ondes de blocs de béton de construction et/ou de démolition ayant une taille centimétrique, pour former des blocs de béton micro-fracturés,
ii) une ou plusieurs étape(s) de traitement mécanique permettant d'extraire à partir desdits blocs de béton micro-fracturés, des granulats recyclés comprenant des granulats naturels nus et des granulats naturels associés à une matrice cimentaire résiduelle adhérente d'une part ; et des fines recyclées d'autre part,
et **en ce qu'**il comprend en outre :
iii) une ou plusieurs étape(s) de carbonatation des granulats recyclés, en présence d'un gaz comprenant au moins 1% en mole de dioxyde de carbone par rapport au nombre de moles total de gaz, pour former des granulats recyclés carbonatés, et/ou
iv) une ou plusieurs étape(s) de carbonatation des fines recyclées, en présence d'un gaz comprenant au moins 1% en mole de dioxyde de carbone par rapport au nombre de moles total de gaz, pour former des fines recyclées carbonatées, et
**en ce que** l'étape ii) comprend au moins une étape ii-1) de broyage non percussif des blocs de béton micro-fracturés.

2. Procédé selon la revendication 1, **caractérisé en ce que** les blocs de béton de construction et/ou de démolition ont une taille d'au plus 10 cm.

3. Procédé selon l'une quelconque des revendications précédentes, **caractérisé en ce que** le traitement micro-ondes de l'étape i) est effectué pendant une durée allant de 30 s à 10 min.

4. Procédé selon l'une quelconque des revendications précédentes, **caractérisé en ce que** le traitement micro-ondes i) est effectué à une fréquence allant de 915 **MHz** à 2450 MHz.

5. Procédé selon l'une quelconque des revendications précédentes, **caractérisé en ce que** les granulats naturels nus sont choisis parmi des gravillons, des sables de granulométrie supérieure ou égale à 1 mm, et un de leurs mélanges ; et les granulats naturels associés à une matrice cimentaire résiduelle adhérente sont choisis parmi des gravillons, des sables de granulométrie supérieure ou égale à 1 mm, et un de leurs mélanges.

6. Procédé selon l'une quelconque des revendications précédentes, **caractérisé en ce que** la matrice cimentaire résiduelle adhérente associée aux granulats naturels comprend des granulats naturels ayant une granulométrie inférieure à 1 mm.

7. Procédé selon l'une quelconque des revendications précédentes, **caractérisé en ce que** l'étape ii-1) de broyage des blocs de béton micro-fracturés est effectuée à l'aide d'au moins un concasseur non percussif choisi parmi un broyeur à cylindres et un broyeur à rouleaux à haute pression.

8. Procédé selon l'une quelconque des revendications précédentes, **caractérisé en ce que** l'étape ii) comprend en outre au moins une étape ii-2) de criblage.

9. Procédé selon l'une quelconque des revendications précédentes, **caractérisé en ce que** les granulats recyclés présentent une granulométrie maximale G_{M} d'au plus 45 mm, ou d'au plus 25 mm, ou d'au plus 11,2 mm, ou d'au plus 8 mm, ou d'au plus 4 mm.

10. Procédé selon l'une quelconque des revendications précédentes, **caractérisé en ce que** les granulats recyclés présentent une granulométrie Gₘ d'au moins 1 mm.

11. Procédé selon l'une quelconque des revendications précédentes, **caractérisé en ce qu'**il comprend en outre au moins une étape a) de nettoyage des granulats recyclés.

12. Procédé selon l'une quelconque des revendications précédentes, **caractérisé en ce qu'**il comprend en outre au moins une étape b) de lavage des granulats recyclés.

13. Procédé selon l'une quelconque des revendications précédentes, **caractérisé en ce que** l'étape iii) est effectuée en présence d'un gaz comprenant au moins 10% en mole de CO₂, par rapport au nombre de moles total de gaz.

14. Installation de recyclage mettant en œuvre un procédé de recyclage tel que défini dans l'une quelconque des revendications précédentes, **caractérisée en ce qu'**elle comprend :
- au moins un tunnel micro-ondes pour former des blocs de béton micro-fracturés à partir de blocs de béton de construction et/ou de démolition de taille centimétrique,
- au moins un broyeur à cylindres pour fragmenter les blocs de béton micro-fracturés et libérer des granulats recyclés comprenant des granulats naturels nus et des granulats naturels associés à une matrice cimentaire ; et des fines recyclées,
- au moins un crible ou tamiseur vibrant, giratoire ou rotatif pour séparer les granulats recyclés des fines recyclées, éventuellement les nettoyer, et éventuellement les laver, et
- au moins un réacteur de carbonatation pour former en présence d'un gaz comprenant au moins 1% en mole de dioxyde de carbone par rapport au nombre de moles total de gaz, des granulats recyclés carbonatés, et/ou des fines recyclées carbonatées.

15. Granulats recyclés (GBR) obtenus selon un procédé tel que défini à l'une quelconque des revendications 1 à 13, **caractérisés en ce que** les GBR d'une fraction granulométrique donnée, supérieure ou égale à 1 mm, comprennent au moins 50% en masse de granulats naturels nus de ladite fraction granulométrique donnée, par rapport à la masse totale des GBR de ladite fraction granulométrique donnée.

## Patentansprüche

1. Verfahren zur Wiederverwertung eines Betons aus dem Bauwesen und/oder Abriss, **dadurch gekennzeichnet, dass** es wenigstens die folgenden Schritte umfasst:
i) einen oder mehrere Schritte der Behandlung von Betonblöcken aus dem Bauwesen und/oder Abriss mit einer Größe im Zentimeterbereich durch Mikrowellen zur Bildung von mikrofrakturierten Betonblöcken,
ii) einen oder mehrere Schritte der mechanischen Behandlung, die es erlaubt, ausgehend von den mikrofrakturierten Betonblöcken einerseits wiederverwertete Granulate, die saubere natürliche Granulate sowie natürliche Granulate, welche mit einer anhaftenden Restzementmatrix verbunden sind, umfassen, und andererseits wiederverwerteten Feinkörnungen zu gewinnen,
und dadurch, dass es weiterhin Folgendes umfasst:
iii) einen oder mehrere Schritte der Carbonatierung der wiederverwerteten Granulate in Gegenwart eines Gases, das wenigstens 1 Molprozent Kohlendioxid umfasst, bezogen auf die Stoffmenge des Gesamtgases, unter Bildung von carbonatierten wiederverwerteten Granulaten und/oder
iv) einen oder mehrere Schritte der Carbonatierung der wiederverwerteten Feinkörnungen, in Gegenwart eines Gases, das wenigstens 1 Molprozent Kohlendioxid umfasst, bezogen auf die Stoffmenge des Gesamtgases, unter Bildung von carbonatierten wiederverwerteten Feinkörnungen, und
dadurch, dass Schritt ii) wenigstens einen Schritt ii-1) der schlagfreien Zerkleinerung der mikrofrakturierten Betonblöcke umfasst.

2. Verfahren gemäß Anspruch 1, **dadurch gekennzeichnet, dass** die Betonblöcke aus dem Bauwesen und/oder Abriss eine Größe von höchstens 10 cm haben.

3. Verfahren gemäß einem der vorstehenden Ansprüche, **dadurch gekennzeichnet, dass** die Mikrowellenbehandlung von Schritt i) während einer Dauer von 30 s bis 10 min durchgeführt wird.

4. Verfahren gemäß einem der vorstehenden Ansprüche, **dadurch gekennzeichnet, dass** die Mikrowellenbehandlung i) mit einer Frequenz von 915 MHz bis 2450 MHz durchgeführt wird.

5. Verfahren gemäß einem der vorstehenden Ansprüche, **dadurch gekennzeichnet, dass** die sauberen natürlichen Granulate aus Splitten, Sanden mit einer Korngröße von größer oder gleich 1 mm und einem ihrer Gemische ausgewählt sind; und die natürlichen Granulate, die mit einer anhaftenden Restzementmatrix verbunden sind, aus Splitten, Sanden mit einer Korngröße von größer oder gleich 1 mm und einem ihrer Gemische ausgewählt sind.

6. Verfahren gemäß einem der vorstehenden Ansprüche, **dadurch gekennzeichnet, dass** die mit den natürlichen Granulaten verbundene anhaftende Restzementmatrix natürliche Granulate mit einer Korngröße von unter 1 mm umfasst.

7. Verfahren gemäß einem der vorstehenden Ansprüche, **dadurch gekennzeichnet, dass** der Schritt ii-1) des Zerkleinerns der mikrofrakturierten Betonblöcke mit Hilfe wenigstens eines schlagfreien Brechers durchgeführt wird, der aus einem Walzenbrecher und einer Hochdruckwalzenpresse ausgewählt ist.

8. Verfahren gemäß einem der vorstehenden Ansprüche, **dadurch gekennzeichnet, dass** Schritt ii) ferner wenigstens einen Schritt ii-2) des Siebens umfasst.

9. Verfahren gemäß einem der vorstehenden Ansprüche, **dadurch gekennzeichnet, dass** die wiederverwerteten Granulate eine maximale Korngröße G_{M} von höchstens 45 mm oder höchstens 25 mm oder höchstens 11,2 mm oder höchstens 8 mm oder höchstens 4 mm aufweisen.

10. Verfahren gemäß einem der vorstehenden Ansprüche, **dadurch gekennzeichnet, dass** die wiederverwerteten Granulate eine Korngröße Gₘ von wenigstens 1 mm aufweisen.

11. Verfahren gemäß einem der vorstehenden Ansprüche, **dadurch gekennzeichnet, dass** es ferner wenigstens einen Schritt a) der Reinigung der wiederverwerteten Granulate umfasst.

12. Verfahren gemäß einem der vorstehenden Ansprüche, **dadurch gekennzeichnet, dass** es ferner wenigstens einen Schritt b) des Waschens der wiederverwerteten Granulate umfasst.

13. Verfahren gemäß einem der vorstehenden Ansprüche, **dadurch gekennzeichnet, dass** Schritt iii) in Gegenwart eines Gases durchgeführt wird, das wenigstens 10 Mol-% CO₂ umfasst, bezogen auf die Stoffmenge des Gesamtgases.

14. Wiederverwertungsanlage zum Durchführen eines Wiederverwertungsverfahrens, wie es in einem der vorstehenden Ansprüche definiert ist, **dadurch gekennzeichnet, dass** sie Folgendes umfasst:
- wenigstens einen Mikrowellentunnel zur Bildung von mikrofrakturierten Betonblöcken ausgehend von Betonblöcken aus dem Bauwesen und/oder Abriss mit einer Größe im Zentimeterbereich,
- wenigstens einen Walzenbrecher zum Fragmentieren der mikrofrakturierten Betonblöcke und Freisetzen von wiederverwerteten Granulaten, die saubere natürliche Granulate und natürliche Granulate, welche mit einer Zementmatrix verbunden sind, umfassen, und von wiederverwerteten Feinkörnungen,
- wenigstens ein Vibrations-, Kreisschwing- oder Rotationssieb oder -klassierer zum Abtrennen der wiederverwerteten Granulate von den wiederverwerteten Feinkörnungen, gegebenenfalls Reinigen derselben und gegebenenfalls Waschen derselben und
- wenigstens einen Carbonatierungsreaktor zur Bildung von carbonatierten wiederverwerteten Granulaten und/oder carbonatierten wiederverwerteten Feinkörnungen in Gegenwart eines Gases, das wenigstens 1 Molprozent Kohlendioxid umfasst, bezogen auf die Stoffmenge des Gesamtgases.

15. Wiederverwertete Granulate (GBR), erhalten nach einem Verfahren, wie es in einem der Ansprüche 1 bis 13 definiert ist, **dadurch gekennzeichnet, dass** die GBR einer gegebenen Korngrößenfraktion von größer oder gleich 1 mm wenigstens 50 Massenprozent saubere natürliche Granulate der gegebenen Korngrößenfraktion umfassen, bezogen auf die Gesamtmasse der GBR der gegebenen Korngrößenfraktion.

## Claims

1. A method for recycling concrete from construction and/or demolition, **characterized in that** it comprises at least the following steps:
i) one or more steps of microwave treatment of concrete blocks from construction and/or demolition with a size on the centimeter scale, to form microfractured concrete blocks,
ii) one or more steps of mechanical treatment making it possible to extract, from said microfractured concrete blocks, recycled aggregates comprising bare natural aggregates and natural aggregates associated with an adherent residual cementitious matrix; as well as recycled fines,
and **in that** it further comprises:
iii) one or more steps of carbonating the recycled aggregates, in the presence of a gas containing at least 1 mol.% carbon dioxide with respect to the total number of moles of gas, to form carbonated recycled aggregates, and/or
iv) one or more steps of carbonating the recycled fines, in the presence of a gas containing at least 1 mol.% carbon dioxide with respect to the total number of moles of gas, to form carbonated recycled fines, and
**in that** step ii) comprises at least one step ii-1) of non-percussive milling the microfractured concrete blocks.

2. The method according to claim 1, **characterized in that** the concrete blocks from construction and/or demolition have a size of at most 10 cm.

3. The method according to any one of the preceding claims, **characterized in that** the microwave treatment of step i) is carried out for a time ranging from 30 s to 10 min.

4. The method according to any one of the preceding claims, **characterized in that** the microwave treatment i) is carried out at a frequency ranging from 915 MHz to 2450 MHz.

5. The method according to any one of the preceding claims, **characterized in that** the bare natural aggregates are selected from gravel, sands with a particle size of 1 mm or more, and one of the mixtures thereof; and the natural aggregates associated with an adherent residual cementitious matrix are selected from gravel, sands with a particle size of 1 mm or more, and one of the mixtures thereof.

6. The method according to any one of the preceding claims, **characterized in that** the adherent residual cementitious matrix associated with the natural aggregates comprises natural aggregates having a particle size of less than 1 mm.

7. The method according to any one of the preceding claims, **characterized in that** step ii-1) of milling the microfractured concrete blocks is carried out using at least one non-percussive crusher selected from a roller mill and a high-pressure roll crusher.

8. The method according to any one of the preceding claims, **characterized in that** step ii) further comprises at least one screening step ii-2).

9. The method according to any one of the preceding claims, **characterized in that** the recycled aggregates have a maximum particle size G_{M} of at most 45 mm, or at most 25 mm, or at most 11.2 mm, or at most 8 mm, or at most 4 mm.

10. The method according to any one of the preceding claims, **characterized in that** the recycled aggregates have a particle size Gₘ of at least 1 mm.

11. The method according to any one of the preceding claims, **characterized in that** it further comprises at least one step a) of cleaning the recycled aggregates.

12. The method according to any one of the preceding claims, **characterized in that** it further comprises at least one step b) of washing the recycled aggregates.

13. The method according to any one of the preceding claims, **characterized in that** step iii) is carried out in the presence of a gas comprising at least 10 mol.% of CO₂, with respect to the total number of moles of gas.

14. A recycling installation for carrying out a recycling method as defined in any one of the preceding claims, **characterized in that** it comprises:
- at least one microwave tunnel for forming microfractured concrete blocks from concrete blocks from construction and/or demolition with a size on the centimeter scale,
- at least one roller mill for fragmenting the microfractured concrete blocks and releasing recycled aggregates comprising bare natural aggregates and natural aggregates associated with a cementitious matrix; and recycled fines,
- at least one vibrating, gyratory or rotary screen or sieve for separating the recycled aggregates from the recycled fines, optionally cleaning them, and optionally washing them, and
- at least one carbonation reactor for forming in the presence of a gas containing at least 1 mol.% carbon dioxide with respect to the total number of moles of gas, carbonated recycled aggregates and/or carbonated recycled fines.

15. Recycled aggregates (RCA) obtained according to a method as defined in any one of claims 1 to 13, **characterized in that** the RCAs with a given particle size fraction, of 1 mm or more, comprise at least 50 wt.% of bare natural aggregates with said given particle size fraction, with respect to the total weight of the RCAs with said given particle size fraction.
